# EUROPÄISCHE PATENTSCHRIFT

(11) **EP 3 510 281 B1**
(45) Veröffentlichungstag und Bekanntmachung des Hinweises auf die Patenterteilung: **15.02.2023**
(21) Anmeldenummer: 17761214.0
(22) Anmeldetag: 24.08.2017
(51) Int. Cl.: F03D 1/00, F03D 80/00, F03D 80/50

(54) **ROTORARRETIERVORRICHTUNG FÜR EINE WINDENERGIEANLAGE UND VERFAHREN**
ROTOR ARRESTING DEVICE FOR A WIND TURBINE AND METHOD
DISPOSITIF D'ARRÊT DE ROTOR POUR UNE ÉOLIENNE ET PROCÉDÉ

(30) Priorität: 09.09.2016 DE 102016116945
(43) Veröffentlichungstag der Anmeldung: 17.07.2019
(73) Patentinhaber: Wobben Properties GmbH, 26607 Aurich (DE)
(72) Erfinder: RÖER, Jochen, 27777 Ganderkesee (DE)
(74) Vertreter: Eisenführ Speiser
(86) Internationale Anmeldenummer: PCT/EP2017/071279
(87) Internationale Veröffentlichungsnummer: WO 2018/046305

(56) Entgegenhaltungen:
- EP-A1- 2 607 684
- EP-A2- 0 952 337
- US-A1- 2014 110 949

## Beschreibung

Die Erfindung betrifft eine Windenergieanlage mit einer Rotorarretiervorrichtung sowie Verfahren zur Arretierung und zum Bewegen eines Rotors einer Windenergieanlage.

Eine Windenergieanlage wandelt die Energie des Windes in elektrische Energie um. Die dominierende Bauform von Windenergieanlagen ist die dreiblättrige Horizontalachsen-Windenergieanlage, bei der sich im Betrieb der Rotor auf der Luvseite befindet und deren Maschinenhaus auf einem Turm angeordnet ist und der Windrichtung aktiv nachgeführt wird.

Die Rotorblätter einer Windenergieanlage sind in der Regel an einer gemeinsamen Nabe befestigt. Diese Nabe ist vorzugsweise drehsteif mit einer Rotationsbaugruppe verbunden. Bei Windenergieanlagen mit einem Direktantrieb, das heißt ohne ein Getriebe zur Übersetzung, treibt der Rotor in der Regel einen Generatorrotor an. Die Rotationsbaugruppe umfasst bei Windenergieanlagen mit Getriebe in der Regel eine Rotorwelle, welche den Rotor und ein Getriebe miteinander verbindet und so die Drehbewegung des Rotors in eine Getriebeabtriebsbewegung umwandelt und anschließend diese Getriebeabtriebsbewegung wiederum an einen Generator überträgt.

Als Rotor wird im Sinne dieser Anmeldung der aerodynamische Rotor einer Windenergieanlage mit in der Regel drei Rotorblättern verstanden. Als Generatorrotor wird im Sinne dieser Anmeldung ein elektrodynamischer Rotor eines Generators verstanden. Ein Generator im Sinne dieser Anmeldung umfasst sowohl Innenläufer-Generatoren, bei denen ein Generatorrotor radial innerhalb eines Stators rotiert als auch Außenläufer-Generatoren, bei denen ein Generatorrotor radial außerhalb um einen Stator rotiert.

In verschiedenen Situationen ist es erforderlich, den Rotor einer Windenergieanlage zu arretieren. Beispielsweise ist es häufig erforderlich, dass der Rotor arretiert wird, um Reparatur- und/oder Wartungsarbeiten, beispielsweise im Inneren der Gondel oder im Bereich der Nabe, durchzuführen. Ferner ist es beispielsweise erforderlich, den Rotor zu arretieren, wenn die Windenergieanlage montiert und/oder demontiert wird. Beispielsweise entstehen hohe Arretierkräfte und/oder Arretiermomente zum Halten eines Rotors in einer definierten Position, wenn nicht alle vorgesehenen Rotorblätter angeordnet sind und sich der Rotor in einer labilen Position befindet. Dadurch bewirken die nicht gleichmäßig um einen Drehpunkt angeordneten Rotorblätter ein hohes Drehmoment in Bezug auf diesen Drehpunkt. Ferner ist es häufig erforderlich, dass der Rotor mit einer hohen Genauigkeit in einer gewünschten Position arretiert wird, sodass positionsabhängige Reparaturen und/oder Wartungsarbeiten und/oder Montagearbeiten durchgeführt werden können.

Derzeitige Rotorarretiervorrichtungen haben vornehmlich das Ziel, eine sichere Arretierung bereitzustellen. Dies erklärt sich insbesondere dadurch, dass durch entsprechende Sicherheitsvorkehrungen für an der Windenergieanlage arbeitende Personen gesorgt sein muss. Daher sind in bekannten Rotorarretiervorrichtungen vornehmlich Kombinationen aus Bolzen und vorzugsweise mehreren Öffnungen vorgesehen. Vorzugsweise sind an einem Generatorrotor eines Generators, insbesondere an einem Rotorträger, Öffnungen angeordnet, deren Durchtrittsrichtung vorzugsweise im Wesentlichen parallel zu einer Rotationsachse des Generators angeordnet ist. Am Generatorstator, insbesondere an einem Statorträger, sind vorzugsweise zu den Öffnungen korrespondierende Bolzen angeordnet, die in den Öffnungen angeordnet werden können. Durch die Anordnung der Bolzen innerhalb der Öffnungen kann eine Arretierung des Generatorrotors und somit auch des aerodynamischen Rotors erreicht werden.

Eine derartige Rotorarretiervorrichtung kann zwar einerseits eine sichere Arretierung des Rotors bereitstellen, allerdings ist eine Positionierung des Rotors nur auf den Positionen möglich, an denen Öffnungen an der Rotationsbaugruppe vorgesehen sind. Ferner ist es beispielsweise zu Montage von Rotorblättern erforderlich, nach der Montage eines ersten Rotorblatts die Arretierung zu lösen, um den Rotor in die Position für die Montage des zweiten Rotorblatts zu drehen und dort wieder zu arretieren. Dies resultiert in verschiedensten Anwendungsbereichen in hohen Kosten und einem großen Aufwand. Die existierenden Systeme und Verfahren zum Arretieren von Windenergieanlagenrotoren bieten zwar verschiedene Vorteile, jedoch sind weitere Verbesserungen wünschenswert. Das Deutsche Patent- und Markenamt hat in der Prioritätsanmeldung zu vorliegender Anmeldung folgenden Stand der Technik recherchiert: DE 10 2010 020 355 A1 und GB 2 535 331 A. Weiterer Stand der Technik ist in dem Dokument EP 0 952 337 A2 beschrieben, welches eine Windenergieanlage mit Mitteln zur Windnachführung durch Verstellen der Ausrichtung der Gondel zum Turm offenbart.

Es ist daher eine Aufgabe der vorliegenden Erfindung, eine Lösung bereitzustellen, welche einen oder mehrere der genannten Nachteile vermindert oder beseitigt. Ferner ist es eine Aufgabe der vorliegenden Erfindung, eine Lösung bereitzustellen, welche eine kostengünstigere und/oder einfachere Montage und/oder Wartung und/oder Reparatur einer Windenergieanlage ermöglicht. Darüber hinaus ist es eine Aufgabe der vorliegenden Erfindung, eine Lösung bereitzustellen, welche die Arretierung einer Windenergieanlage verbessert.

Gemäß einem ersten Aspekt der vorliegenden Erfindung wird die eingangs genannte Aufgabe gelöst durch eine Windenergieanlage gemäß Anspruch 1.

Die Rotationsbaugruppe ist erfindungsgemäß drehsteif mit dem Rotor verbunden. Wenn nicht explizit anders beschrieben, ist unter einem Rotor die Baugruppe umfassend mindestens ein Rotorblatt, eine Nabe, an der das mindestens eine Rotorblatt angeordnet ist, zu verstehen. Oft weist der Rotor auch einen Spinner auf. Die Rotationsbaugruppe kann beispielsweise einen Rotorträger und/oder eine Rotorwelle umfassen, welche(r) drehsteif an der Rotornabe angeordnet ist. Vorzugsweise kann die Rotationsbaugruppe auch einen Generatorrotor umfassen. Ferner vorzugsweise umfasst die Rotationsbaugruppe jegliches Bauteil, das mittels einer Drehung des Rotors ebenfalls in eine Drehbewegung versetzt wird.

Neben der Rotationsbaugruppe umfasst eine Windenergieanlage in der Regel eine Standbaugruppe, welche gegenüber der Rotationsbaugruppe ortsfest ist. Die Standbaugruppe umfasst insbesondere derartige Elemente, die innerhalb der Gondel angeordnet sind und die um eine Rotationsachse des Rotors keine Rotationsbewegung ausführen. Die Standbaugruppe ist somit gegenüber der Rotationsbaugruppe ortsfest. Gegenüber dem Turm und/oder dem Fundament der Windenergieanlage ist die Standbaugruppe zusammen mit der Gondel in der Regel jedoch um eine im Wesentlichen vertikale Achse drehbar, da Windenergieanlagen in der Regel eine Windrichtungsnachführung aufweisen, sodass die Gondel um eine Achse parallel zur Längsachse des Turmes rotieren kann. Somit rotiert auch die Standbaugruppe, welche innerhalb der Gondel angeordnet ist, gegenüber einem Punkt außerhalb der Gondel, insbesondere gegenüber dem Boden, auf dem die Windenergieanlage errichtet ist. Ortsfest ist daher im Sinne dieser Anmeldung in Bezug auf die rotierende Rotationsbaugruppe zu verstehen. Die Standbaugruppe umfasst beispielsweise einen Generator-Stator, einen Achszapfen, einen Maschinenträger, ein Generatorgehäuse, oder ein Getriebegehäuse. Ferner vorzugsweise umfasst die Standbaugruppe ein Element, an dem die Kopplungsvorrichtung anordenbar ist.

Die mindestens eine Kopplungsvorrichtung weist mindestens zwei Aktuatoren auf, nämlich den ersten Aktuator und den zweiten Aktuator, wobei unter einem Aktuator vorzugsweise ein Element verstanden wird, das sich und/oder ein weiteres Element in eine definierte Position bewegen kann. Insbesondere sind der erste Aktuator und der zweite Aktuator derart angeordnet und ausgebildet, dass diese das Kopplungselement, mit welchem die Aktuatoren verbunden sind, in verschiedene Positionen bewegen können.

Ferner umfasst die Rotorarretiervorrichtung das Gegenkopplungselement, welches im Einbauzustand und/oder im Betriebszustand an der Rotationsbaugruppe der Windenergieanlage angeordnet ist. Das Gegenkopplungselement und das Kopplungselement sind derart angeordnet und ausgebildet, dass diese eine lösbare, insbesondere formschlüssige, Verbindung bilden können. Diese formschlüssige Verbindung resultiert vorzugsweise darin, dass die Rotationsbaugruppe an einer Rotation um eine Rotationsachse gehindert ist. Diese lösbare Verbindung des Kopplungselements und des Gegenkopplungselements ist gebildet, sobald sich das Kopplungselement in einer Arretierposition befindet.

Wie im Vorherigen bereits ausgeführt, ist die Verbindung des Kopplungselements und des Gegenkopplungselements lösbar gestaltet. Das Kopplungselement kann auch in eine Position gebracht werden, in der die Verbindung gelöst ist, also keine Verbindung von Kopplungselement und Gegenkopplungselement vorliegt. In dieser Position sind das Kopplungselement und das Gegenkopplungselement nicht miteinander verbunden, wobei diese Position als Freigabeposition bezeichnet wird. In der Freigabeposition kann sich die Rotationsbaugruppe um ihre Rotationsachse drehen, ohne dass sie durch das Kopplungselement bzw. die Kopplungsvorrichtung an einer Rotation um diese Rotationsachse gehindert wird. Für ein Kopplungselement ergeben sich vorzugsweise ein, zwei oder mehrere Freigabepositionen, in denen dieses also nicht mit dem Gegenkopplungselement verbunden ist. Darüber hinaus können sich für ein Kopplungselement auch eine, zwei oder mehrere Arretierpositionen ergeben. Dies kann beispielsweise durch die Anordnung von mehr als einem Gegenkopplungselement erreicht werden, wobei das eine Kopplungselement dann ausgebildet und angeordnet ist, mehr als ein Gegenkopplungselement zu erreichen.

Von dieser Freigabeposition aus kann das Kopplungselement von dem ersten Aktuator und von dem zweiten Aktuator mittels einer ersten Kopplungsbewegung des ersten Aktuators und mittels einer zweiten Kopplungsbewegung des zweiten Aktuators in die Arretierposition bewegt werden. Die erste Kopplungsbewegung und die zweite Kopplungsbewegung weisen einen Richtungsanteil auf, der entgegengesetzt gerichtet ist. Dieser sogenannte Einstellrichtungsanteil ist vorzugsweise im Wesentlichen tangential zur Rotationsbaugruppe ausgerichtet. Die erste Kopplungsbewegung umfasst den ersten Einstellrichtungsanteil, der vorzugsweise in eine erste tangentiale Richtung der Rotationsbaugruppe ausgerichtet ist. Die zweite Kopplungsbewegung umfasst den zweiten Einstellrichtungsanteil, der vorzugsweise in eine zweite tangentiale Richtung der Rotationsbaugruppe ausgerichtet ist, wobei die erste tangentiale Richtung und die zweite tangentiale Richtung entgegengesetzt zueinander sind.

In einer bevorzugten Ausführungsvariante der Rotorarretiervorrichtung ist vorgesehen, dass diese zwei oder mehr Kopplungsvorrichtungen und/oder zwei oder mehr erste Aktuatoren und/oder zwei oder mehr zweite Aktuatoren und/oder zwei oder mehr Kopplungselemente umfasst. Die zwei oder mehr Kopplungsvorrichtungen sind vorzugsweise gemäß der zuvor erfolgten Beschreibung der Kopplungsvorrichtung ausgebildet. Ferner vorzugsweise sind die zwei oder mehr Kopplungsvorrichtungen äquidistant an einem Umfang der Rotationsbaugruppe angeordnet. Durch die in der Regel hohen Kräfte und/oder Momente, die bei der Arretierung eines Rotors einer Windenergieanlage auftreten, ist es bevorzugt, dass zwei oder mehr Kopplungsvorrichtungen angeordnet werden. Vorzugsweise werden sechs oder mehr Kopplungsvorrichtungen angeordnet. Insbesondere ist es bevorzugt, zwei oder mehr Kopplungsvorrichtungen anzuordnen, wenn sich zeitweise eine, zwei oder mehr Kopplungsvorrichtungen bzw. deren Kopplungselemente nicht in der Arretierposition befinden, beispielsweise um eine Verbindung mit einem Gegenkopplungselement zu bilden, das von einer derzeitigen Arretierposition in tangentialer Richtung beabstandet ist. Damit das Bewegen eines, zwei oder mehrerer Kopplungselemente zu einem in tangentialer Richtung beabstandeten Gegenkopplungselement bei Gewährleistung einer Rotorarretierung erfolgen kann, sollte sich bei diesem Bewegen noch eine ausreichende Anzahl an Kopplungselementen in einer Arretierposition befinden. Die ausreichende Anzahl an Kopplungselemente in vorzugsweise eins, zwei oder mehr. Somit kann auch eine zyklische Ansteuerung der Kopplungsvorrichtungen erfolgen.

Darüber hinaus kann es vorteilhaft sein, dass die Kopplungsvorrichtung zwei oder mehr erste Aktuatoren und/oder zwei oder mehr zweite Aktuatoren umfasst. Durch die Anordnung von zwei oder mehr ersten und/oder zweiten Aktuatoren kann eine verbesserte Bewegung des Kopplungselements erreicht werden. Darüber hinaus kann bei bestimmten Ausführungsvarianten auch platzsparend eine Mehrzahl an Aktuatoren eingesetzt werden, beispielsweise wenn ein großer Aktuator gegen mehrere kleine ersetzt wird. Darüber hinaus kann es vorteilhaft sein, dass je Kopplungsvorrichtung zwei oder mehr Kopplungselemente eingesetzt werden, sodass beispielsweise eine bessere Kraftverteilung erreicht werden kann.

Gemäß einer weiteren bevorzugten Ausführungsvariante der Rotorarretiervorrichtung ist vorgesehen, dass die erste Kopplungsbewegung einen ersten Kopplungsrichtungsanteil aufweist und die zweite Kopplungsbewegung einen zweiten Kopplungsrichtungsanteil aufweist, wobei der erste Kopplungsrichtungsanteil und der zweite Kopplungsrichtungsanteil gleich gerichtet sind, wobei ferner der erste Kopplungsrichtungsanteil und der zweite Kopplungsrichtungsanteil vorzugsweise von dem Kopplungselement hin zum Gegenkopplungselement gerichtet ist. Eine Kopplungsbewegung umfasst vorzugsweise insbesondere einen Kopplungsrichtungsanteil und einen Einstellrichtungsanteil. In dieser Ausführungsvariante ist vorzugsweise vorgesehen, dass die erste Kopplungsbewegung und die zweite Kopplungsbewegung je einen Bewegungsanteil haben, der gleich gerichtet ist, also der Kopplungsrichtungsanteil, und einen Bewegungsanteil, der entgegen gerichtet ist, also der Einstellrichtungsanteil. Der Kopplungsrichtungsanteil der Kopplungsbewegung ist primär vorgesehen, um das Kopplungselement von einer Freigabeposition in eine Arretierposition zu bewegen. Der Einstellrichtungsanteil der Kopplungsbewegungen ist hingegen zumindest teilweise orthogonal zu dem Kopplungsrichtungsanteil ausgerichtet und somit vorzugsweise primär dafür vorgesehen, um das Kopplungselement in eine tangentiale Richtung der Rotationsbaugruppe zu bewegen. Durch den ersten und zweiten Kopplungsrichtungsanteil und den ersten und zweiten Einstellrichtungsanteil der ersten und zweiten Kopplungsbewegung, werden der erste Aktuator und der zweite Aktuator vorzugsweise in einer V-förmigen Anordnung angeordnet. Ferner resultieren in Folge einer tangentialen Kraft auf das Kopplungselement vorzugsweise keine ausschließlichen Querkräfte auf die Aktuatoren bzw. das Kopplungselement, sodass das Risiko eines Verklemmens reduziert ist.

Eine weitere bevorzugte Fortbildung der Rotorarretiervorrichtung zeichnet sich dadurch aus, dass der erste Kopplungsrichtungsanteil und/oder der zweite Kopplungsrichtungsanteil parallel zu einer Rotationsachse der Rotationsbaugruppe der Windenergieanlage ausgerichtet ist bzw. sind. Das Gegenkopplungselement ist in dieser Ausführungsvariante vorzugsweise an einem Ort der Rotationsbaugruppe angeordnet, die beispielsweise stirnseitig für das Kopplungselement zugänglich ist, sodass das Kopplungselement mit einer axialen Bewegung dem Gegenkopplungselement zugeführt werden kann. Vorzugsweise ist das Gegenkopplungselement an einer Stirnseite eines oder mehrerer Elemente der Rotationsbaugruppe angeordnet. Ferner vorzugsweise ist das Gegenkopplungselement an einer radialen Umfangsfläche eines oder mehrerer Elemente der Rotationsbaugruppe angeordnet, jedoch von einem in axialer Richtung bewegten Kopplungselement zugänglich.

Ferner ist vorzugsweise vorgesehen, dass der erste Kopplungsrichtungsanteil und/oder der zweite Kopplungsrichtungsanteil orthogonal und/oder radial zu der Rotationsachse der Rotationsbaugruppe der Windenergieanlage ausgerichtet ist bzw. sind. Das Gegenkopplungselement ist in dieser Ausführungsvariante vorzugsweise auf bzw. an einer radialen Umfangsfläche der Rotationsbaugruppe bzw. einem Element der Rotationsbaugruppe angeordnet, sodass das Kopplungselement mit dem Gegenkopplungselement in Verbindung gebracht werden kann, indem das Kopplungselement eine radiale und/oder orthogonale Bewegung zu der Rotationsachse der Rotationsbaugruppe ausführt. Ferner vorzugsweise ist das Gegenkopplungselement an einer Stirnfläche der Rotationsbaugruppe bzw. einem oder mehreren Elementen der Rotationsbaugruppe angeordnet, wobei das derart angeordnete Gegenkopplungselement mit einem orthogonal und/oder radial zu der Rotationsachse bewegten Kopplungselement in Verbindung gebracht werden kann.

In einer weiteren bevorzugten Ausführungsvariante der Rotorarretiervorrichtung ist vorgesehen, dass die Kopplungsvorrichtung von der Arretierposition in die Freigabeposition mittels einer ersten Entkopplungsbewegung des ersten Aktuators und/oder mittels einer zweiten Entkopplungsbewegung des zweiten Aktuators bringbar ist, und/oder wobei die erste Entkopplungsbewegung einen ersten Freistellrichtungsanteil aufweist und die zweite Entkopplungsbewegung einen zweiten Freistellrichtungsanteil aufweist, wobei der erste Freistellrichtungsanteil und der zweite Freistellrichtungsanteil entgegengesetzt gerichtet sind, und/oder wobei die erste Entkopplungsbewegung einen ersten Entkopplungsrichtungsanteil aufweist und die zweite Entkopplungsbewegung einen zweiten Entkopplungsrichtungsanteil aufweist, wobei der erste Entkopplungsrichtungsanteil und der zweite Entkopplungsrichtungsanteil gleich gerichtet sind.

Die erste Entkopplungsbewegung ist vorzugsweise parallel zum ersten Kopplungsrichtungsanteil, wobei dieser ferner vorzugsweise entgegengesetzt gerichtet ist. Ferner vorzugsweise ist der zweite Entkopplungsrichtungsanteil parallel zum zweiten Kopplungsrichtungsanteil, wobei der zweite Kopplungsrichtungsanteil entgegengesetzt zum zweiten Entkopplungsrichtungsanteil gerichtet ist. Darüber hinaus kann der erste Freistellrichtungsanteil parallel zu dem ersten Einstellrichtungsanteil ausgerichtet sein, wobei diese vorzugsweise entgegen gerichtet sind. Ferner kann der zweite Freistellrichtungsanteil parallel zu dem zweiten Einstellrichtungsanteil ausgerichtet sein, wobei diese vorzugsweise entgegengesetzt gerichtet sind. Die erste Entkopplungsbewegung und/oder die zweite Entkopplungsbewegung sind insbesondere eingerichtet, um das Kopplungselement von dem Gegenkopplungselement hinweg zu bewegen. Insbesondere ist bzw. sind die erste Entkopplungsbewegung und/oder die zweite Entkopplungsbewegung eingerichtet, um die lösbare Verbindung des Kopplungselements mit dem Gegenkopplungselement zu lösen.

Gemäß einer weiteren besonders bevorzugten Ausführungsvariante der Rotorarretiervorrichtung ist vorgesehen, dass der erste Aktuator und der zweite Aktuator jeweils unabhängig voneinander ansteuerbar ausgebildet sind. Infolgedessen kann der erste Aktuator vorzugsweise die erste Kopplungsbewegung und/oder die erste Entkopplungsbewegung unabhängig von der zweiten Kopplungsbewegung und/oder der zweiten Entkopplungsbewegung des zweiten Aktuators durchführen. Da der erste Aktuator und der zweite Aktuator jeweils mit dem Kopplungselement und mit der Standbaugruppe verbunden sind, sind die Bewegungsanteile des ersten Aktuators und/oder des zweiten Aktuators jedoch in der Regel voneinander abhängig. Darüber hinaus besteht die Möglichkeit, dass der erste Aktuator oder der zweite Aktuator kraftlos geschaltet wird, sodass der jeweils nicht kraftlos geschaltete Aktuator die Bewegung des jeweils kraftlos geschalteten Aktuators mit bestimmt. Dies gilt vorzugsweise ebenfalls, wenn die Kräfte des einen Aktuators die entgegengesetzt wirkenden Kräfte des anderen Aktuators übersteigen.

Es ist ferner bevorzugt, dass der erste Aktuator und/oder der zweite Aktuator einen ausfahrbaren Zylinder umfasst bzw. umfassen. Vorzugsweise führt bzw. führen der erste Aktuator und/oder der zweite Aktuator die im Vorherigen beschriebenen Bewegungen bei dieser Ausführungsvariante mittels des ausfahrbaren Zylinders aus. Vorzugsweise ist dieser Zylinder durch ein weiteres Element geführt. Vorzugsweise befindet sich der Zylinder innerhalb einer Hülse, wobei die Hülse ferner vorzugsweise eine radiale Umfangsfläche des Zylinders führt. Darüber hinaus kann die Hülse drehbar an der Standbaugruppe angeordnet sein.

Eine weitere besonders bevorzugte Ausführungsvariante der Rotorarretiervorrichtung sieht vor, dass der erste Aktuator und/oder der zweite Aktuator einen Hydraulikzylinder umfasst bzw. umfassen oder als Hydraulikzylinder ausgebildet ist bzw. sind, wobei die Hydraulikflüssigkeit vorzugsweise Wasser ist. Hydraulikzylinder zeichnen sich vorzugsweise dadurch aus, dass diese eine große Kraft in mindestens einer linearen Kraftrichtung ausüben können. Ferner zeichnen sich Hydraulikzylinder dadurch aus, dass diese große Kräfte auch stationär halten können. Ein Hydraulikzylinder ist in der Regel ein mittels Flüssigkeit betriebener Arbeitszylinder. Hydraulikzylinder werden auch als hydraulischer Linearmotor bezeichnet. Vorzugsweise sind der erste und/oder zweite Aktuator, insbesondere der erste und/oder zweite Hydraulikzylinder ausgebildet und angeordnet, ein Moment von 100 bis 1000 kNm auf die Rotationsbaugruppe aufbringen zu können. Das von der Rotationsbaugruppe, insbesondere dem Rotor, herrührende und von der Standbaugruppe, insbesondere dem Stator, aufzunehmende(äußere) Moment kann in einer Größenordnung von bis zu oder sogar über 10.000kNm liegen. Da vorzugsweise mehrere erste und/oder zweite Aktuatoren vorgesehen sind, können die von den Aktuatoren aufzubringenden Momente deutlich niedriger liegen.

In einem Hydraulikzylinder wird die Energie aus der Hydraulikflüssigkeit, die vorzugsweise von einer hydraulischen Druckquelle bereitgestellt wird, in eine einfach steuerbare, vorzugsweise geradlinig wirkende, Kraft umgesetzt. Vorzugsweise umfassen Hydraulikzylinder als Hauptbestandteile ein rohrförmiges Element mit einem Hohlraum, der einen Querschnitt orthogonal zur Längsachse des Hohlraums aufweist und einen Zylinder, welcher innerhalb dieses Hohlraums angeordnet ist. Im vorliegenden Anwendungsfall ist als Hydraulikflüssigkeit vorzugsweise Wasser vorgesehen, da die sonst auch übliche Hydraulikflüssigkeit Öl bei einer Fehlfunktion des Hydrauliksystems zu Nachteilen führen kann. Dabei ist insbesondere das Auslaufen von Öl auf andere Komponenten und/oder auf die Kopplungselemente bzw. Gegenkopplungselemente problematisch, da dadurch die Arretierfunktionalität reduziert werden könnte. Unter Umständen kann jedoch ebenfalls Öl als Hydraulikflüssigkeit eingesetzt werden.

Ferner vorzugsweise weist bzw. weisen der erste Aktuator und/oder der zweite Aktuator ein Rückschlagventil auf. Insbesondere als Lasthalteventile ausgebildete Rückschlagventile verhindern, dass Lasten an Zylindern und/oder Aktuatoren ungesteuert absinken können. Insbesondere im vorliegenden Anwendungsfeld der Rotorarretierung für Windenergieanlagen ist ein derartiger Haltemechanismus von großem Vorteil. Insbesondere kann durch das Vorsehen eines Rückschlagventils ein ungewolltes Auflösen der Verbindung zwischen Kopplungselement und Gegenkopplungselement vermieden werden bzw. das Risiko reduziert werden.

Eine weitere bevorzugte Fortbildung der Rotorarretiervorrichtung zeichnet sich dadurch aus, dass der erste Aktuator und/oder der zweite Aktuator drehbar an der Standbaugruppe anordenbar ist bzw. sind und/oder wobei der erste Aktuator und/oder der zweite Aktuator drehbar mit dem Kopplungselement verbunden ist bzw. sind. Vorzugsweise ist bzw. sind der erste Aktuator und/oder der zweite Aktuator um eine Achse drehbar, wobei diese Achse an der Standbaugruppe bzw. in einem Bereich angrenzend an die Standbaugruppe angeordnet ist. Ferner vorzugsweise ist bzw. sind der erste Aktuator und/oder der zweite Aktuator um eine Achse drehbar, wobei diese Achse an dem Kopplungselement bzw. in einem Bereich angrenzend an das Kopplungselement angeordnet ist.

Ferner ist vorzugsweise vorgesehen, dass der erste Aktuator und/oder der zweite Aktuator mit der Standbaugruppe derart drehbar verbunden ist bzw. sind, dass der erste Aktuator und/oder der zweite Aktuator um eine Achse drehbar ist bzw. sind, die parallel zu der Rotationsachse der Rotationsbaugruppe der Windenergieanlage ausgerichtet ist. Der erste Aktuator und/oder der zweite Aktuator ist bzw. sind in dieser Ausführungsvariante in einer Ebene drehbar, die orthogonal zu der Rotationsachse der Rotationsbaugruppe ausgerichtet ist. Vorzugsweise ist diese Ebene im Wesentlichen flächenparallel zur Drehebene des Rotors.

Es ist ferner bevorzugt, dass der erste Aktuator und/oder der zweite Aktuator mit der Standbaugruppe derart drehbar verbunden ist bzw. sind, dass der erste Aktuator und/oder der zweite Aktuator um eine Achse drehbar ist bzw. sind, die orthogonal und/oder radial zu der Rotationsachse der Rotationsbaugruppe der Windenergieanlage ausgerichtet ist. Gemäß einer weiteren bevorzugten Ausführungsvariante der Rotorarretiervorrichtung ist vorgesehen, dass der erste Aktuator und/oder der zweite Aktuator mit dem Kopplungselement derart drehbar verbunden ist bzw. sind, dass der erste Aktuator und/oder der zweite Aktuator um eine Achse drehbar ist bzw. sind, die parallel zu der Rotationsachse der Rotationsbaugruppe der Windenergieanlage ausgerichtet ist.

Eine weitere besonders bevorzugte Ausführungsvariante der Rotorarretiervorrichtung sieht vor, dass der erste Aktuator und/oder der zweite Aktuator mit dem Kopplungselement derart drehbar verbunden ist bzw. sind, dass der erste Aktuator und/oder der zweite Aktuator um eine Achse drehbar ist bzw. sind, die orthogonal und/oder radial zu der Rotationsachse der Rotationsbaugruppe der Windenergieanlage ausgerichtet ist. In einer besonders bevorzugten Ausführungsvariante der Rotorarretiervorrichtung ist vorgesehen, dass die Aktuatoren an der Standbaugruppe und an dem Kopplungselement drehbar verbunden sind. Somit kann eine maximale Flexibilität der Bewegungsrichtung des ersten Aktuators und/oder des zweiten Aktuators in Kombination mit dem Kopplungselement erreicht werden. Insbesondere werden somit besonders viele Freiheitsgrade für die Kinematik der Kopplungsvorrichtung bereitgestellt.

Gemäß einer weiteren besonders bevorzugten Ausführungsvariante der Rotorarretiervorrichtung ist vorgesehen, dass das Gegenkopplungselement an einer Gegenkopplungsvorrichtung, die vorzugsweise ringförmig ausgebildet ist, angeordnet ist und wobei die Gegenkopplungsvorrichtung an der Rotationsbaugruppe anordenbar ist und/oder wobei das Gegenkopplungselement als Verzahnungsausnehmung ausgebildet ist. Vorzugsweise weist die ringförmig ausgebildete Gegenkopplungsvorrichtung eine Vielzahl von Gegenkopplungselementen auf, die ferner vorzugsweise äquidistant am Umfang der Gegenkopplungsvorrichtung angeordnet sind.

Die Gegenkopplungsvorrichtung kann vorzugsweise als ein Bestandteil eines bestehenden Elementes der Rotationsbaugruppe ausgebildet werden bzw. an einem Element oder zwei oder mehreren Elementen der Rotationsbaugruppe angeordnet werden. Vorzugsweise kann die Gegenkopplungsvorrichtung ein innenverzahnter Umfang des Generatorrotors, insbesondere eines Rotorträgers, sein. Ferner vorzugsweise kann die Gegenkopplungsvorrichtung ein außenverzahnter Umfang des Generatorrotors, insbesondere eines Rotorträgers, sein. Ferner vorzugsweise kann die Gegenkopplungsvorrichtung eine verzahnte Stirnseite des Generatorrotors, insbesondere eines Rotorträgers, sein. Die Gegenkopplungsvorrichtung kann alternativ vorzugsweise auch ein separates Element sein, beispielsweise eine Scheibe, die drehsteif an der Rotationsbaugruppe angeordnet ist. Ferner vorzugsweise kann die Gegenkopplungsvorrichtung auch auf der Antriebs- und/oder Abtriebsseite eines Getriebes der Windenergieanlage angeordnet sein. Besonders bevorzugt ist die Ausbildung des Gegenkopplungselements als Verzahnungsausnehmung. Zwei benachbarte Verzahnungsausnehmungen bilden vorzugsweise zwischen sich einen Zahn aus. Die Anordnung einer Vielzahl von Verzahnungsausnehmungen ist besonders bevorzugt.

Eine bevorzugte Fortbildung der Rotorarretiervorrichtung zeichnet sich dadurch aus, dass die Gegenkopplungsvorrichtung eine Vielzahl an Segmentblechen umfasst oder aus einer Vielzahl an Segmentblechen besteht. Ferner ist es bevorzugt, dass eine Vorrichtung der Statorbaugruppe eine Vielzahl an Segmentblechen umfasst oder aus einer Vielzahl an Segmentblechen besteht. Solche Segmentbleche weisen vorzugsweise mindestens einen radialen Abschnitt auf, der ein Segment einer Tragstruktur einer Gegenkopplungsvorrichtung und/oder einer Vorrichtung der Statorbaugruppe bildet und beispielsweise mehrere Versteifungsstreben aufweist, die Versteifungsstreben zur Aufnahme von Druck-, Zug- und Schubkräften ausgebildet sind. Vorzugsweise sind mehrere Segmentbleche in einer Ebene so aneinander angeordnet sind, dass sie gemeinsam einen Blechring ausbilden und mehrere Segmentbleche in den gebildeten Blechringen derart gestapelt sind, dass sie gemeinsam ein Blechpaket ausbilden. Insbesondere ist der radiale Abschnitt vorzugsweise dazu eingerichtet, im Verbund mit den radialen Abschnitten weiterer Segmentbleche eine Tragstruktur einer Gegenkopplungsvorrichtung und/oder einer Vorrichtung der Statorbaugruppe zu bilden.

Diese Ausgestaltung hat u.a. den Vorteil, dass eine Gegenkopplungsvorrichtung und/oder eine Vorrichtung der Statorbaugruppe zeit- und/oder kostengünstiger hergestellt und/oder transportiert werden kann.

Weiter vorzugsweise sind in dem radialen Abschnitt mehrere Durchgangsöffnungen ausgebildet, die zur Durchführung von korrespondierenden Verspannelementen angepasst sind. Die Durchgangsöffnungen sind vorzugsweise entlang von zwei oder mehr voneinander beabstandeten Kreisbogenlinien angeordnet, wobei die Kreisbogenlinien vorzugsweise konzentrisch ausgebildet sind. Besonders bevorzugt sind in einer Ausführungsform mit einer ersten Kreisbogenlinie und einer zweiten Kreisbogenlinie, die Durchgangsöffnungen auf einer ersten Kreisbogenlinie in Umfangsrichtung zu den Durchgangsöffnungen auf einer zweiten Kreisbogenlinie versetzt angeordnet. Weiter vorzugsweise sind die Durchgangsöffnungen auf ihren jeweiligen Kreisbogenlinien zueinander äquidistant angeordnet. Diese Anordnung hat folgenden Vorteil: Die Segmentbleche können überlappend aufeinandergestapelt werden, so dass die "Nahtstellen" zwischen den aneinander in einer Ringebenen angrenzenden Segmentblechen zueinander versetzt werden. Zugleich ermöglicht die äquidistante, insbesondere zwei- oder mehrreihige Anordnung der Durchgangsöffnungen eine axiale Verspannung der überlappenden Segmentbleche. Die hierdurch erzeugte Reibhaftung zwischen den Blechen erhöht die Tragfähigkeit der Blechpakete signifikant und kann zu einem besseren Dämpfungsverhalten akustischer Schwingungen beitragen, die im Betrieb der Windenergieanlage emittiert werden.

Die Verspannelemente sind vorzugsweise dazu eingerichtet, aufeinandergestapelte Segmentbleche fest miteinander zu verbinden. Vorzugsweise sind die Verspannelemente in Form von Gewindestangen, Schrauben, Spannseilen oder dergleichen ausgebildet. Vorzugsweise werden bei der Verspannung endseitig an den Verspannelementen Druckverteilerelemente angeordnet, die dazu eingerichtet sind, die Spannkräfte auf eine möglichst große Oberfläche der Segmentbleche zu verteilen. Die Druckverteilerelemente sind beispielsweise als Scheiben, Ringe, Ringsegmente, Hülsen oder dergleichen ausgebildet.

Weiter vorzugsweise sind in dem radialen Abschnitt mehrere Materialschwächungen oder -aussparungen zwischen den Versteifungsstreben angeordnet. Die Materialschwächungen bzw. -ausnehmungen haben vorzugsweise den Effekt der Gewichtsreduktion. Die Struktur der Versteifungsstreben wird vorzugsweise mittels Laserschneiden, Wasserstrahlschneiden, Prägen oder - besonders bevorzugt - Stanzen erhalten.

Besonders bevorzugt sind die Durchgangsöffnungen und/oder die Versteifungsstreben im dritten radialen Abschnitt jeweils mittels Stanzen eines Grundblechs ausgebildet, wobei vorzugsweise im Fall der Versteifungsstreben Materialbereiche benachbart zu den auszubildenden Streben ausgestanzt oder geprägt werden.

In einer bevorzugten Ausführungsvariante der Rotorarretiervorrichtung ist vorgesehen, dass das als Verzahnungsausnehmung ausgebildete Gegenkopplungselement im Wesentlichen eine halbkreisförmige Geometrie aufweist und/oder das Kopplungselement eine zylindrische Geometrie aufweist. In der Ausführungsvariante mit einer Verzahnungsausnehmung mit einer halbkreisförmigen Geometrie und einem Kopplungselement mit einer zylindrischen Geometrie, wobei diese zylindrische Geometrie vorzugsweise in der halbkreisförmigen Geometrie der Verzahnungsausnehmung anordenbar ist, kann eine besonders gute und schnell herstellbare lösbare Verbindung von Kopplungselement zu Gegenkopplungselement erreicht werden. Insbesondere kann ein Verkanten des Kopplungselements in der Verzahnungsausbildung vermieden werden. Ferner kann im Falle, dass das Kopplungselement zwischen zwei Verzahnungsausnehmungen positioniert wird, dennoch eine schnelle Verbindung von Kopplungselement und Gegenkopplungselement erreicht werden, indem eine tangentiale Bewegung des Kopplungselements und/oder des Gegenkopplungselements durchgeführt wird, so dass das Kopplungselement in der Verzahnungsausnehmung positioniert werden kann.

Eine weitere bevorzugte Fortbildung der Rotorarretiervorrichtung zeichnet sich dadurch aus, dass die Rotorarretiervorrichtung eine Vielzahl an Gegenkopplungselementen umfasst, die vorzugsweise als halbkreisförmige Verzahnungsausnehmungen ausgebildet sind und ferner vorzugsweise kleiner 45 Bogengrad, und/oder kleiner 30 Bogengrad, und/oder kleiner 25 Bogengrad, und/oder kleiner 20 Bogengrad, und/oder kleiner 15 Bogengrad, und/oder kleiner 10 Bogengrad, und/oder kleiner 7,5 Bogengrad, und/oder kleiner 5 Bogengrad, und/oder kleiner 2 Bogengrad, und/oder kleiner 1 Bogengrad voneinander beabstandet sind.

Ferner ist vorzugsweise vorgesehen, dass die Rotorarretiervorrichtung eine Notstromversorgung umfasst, die vorzugsweise als ein, zwei oder mehrere Stromspeicher ausgebildet ist, wobei die Stromspeicher insbesondere Akkumulatoren sind oder umfassen. Eine derartige Notstromversorgung kann eine sichere Versorgung der Komponenten der Rotorarretiervorrichtung gewährleisten, sodass auch bei einem Stromausfall die Rotorarretierung gewährleistet sein kann.

Gemäß einer weiteren besonders bevorzugten Ausführungsvariante der Rotorarretiervorrichtung umfasst diese eine Steuerungsvorrichtung, die angeordnet und ausgebildet ist, das Kopplungselement mittels des ersten Aktuators und mittels des zweiten Aktuators von einer Freigabeposition in eine Arretierposition zu bewegen, wobei das Kopplungselement mit dem Gegenkopplungselement in der Arretierposition lösbar, vorzugsweise formschlüssig, verbunden ist. In einer weiteren bevorzugten Ausführungsvariante der Rotorarretiervorrichtung umfasst diese eine Steuerungsvorrichtung, die angeordnet und ausgebildet ist, das Kopplungselement in eine erste tangentiale Richtung der Rotationsbaugruppe mittels des ersten Aktuators und/oder mittels des zweiten Aktuators zu bewegen, wobei einer der Aktuatoren vorzugsweise kraftlos geschaltet wird. Die Bewegung in tangentiale Richtung wird vorzugsweise durch den ersten Einstellrichtungsanteil oder den zweiten Einstellrichtungsanteil der Kopplungsbewegung bereitgestellt.

Es ist ferner bevorzugt, dass die Rotorarretiervorrichtung eine Steuerungsvorrichtung umfasst, die angeordnet und ausgebildet ist, das erste Kopplungselement mittels des ersten Aktuators und mittels des zweiten Aktuators einer ersten Kopplungsvorrichtung und/oder das zweite Kopplungselement mittels des ersten Aktuators und/oder mittels des zweiten Aktuators einer zweiten Kopplungsvorrichtung von einer Freigabeposition in eine Arretierposition zu bewegen, wobei das erste Kopplungselement und/oder das zweite Kopplungselement mit einem, zwei oder mehreren Gegenkopplungselementen in der Arretierposition lösbar, vorzugsweise formschlüssig, verbunden ist bzw. sind.

Eine weitere besonders bevorzugte Ausführungsvariante der Rotorarretiervorrichtung sieht vor, dass diese eine Steuerungsvorrichtung umfasst, die angeordnet und ausgebildet ist, das erste Kopplungselement in eine erste tangentiale Richtung der Rotationsbaugruppe mittels des ersten Aktuators und/oder mittels des zweiten Aktuators zu bewegen, wobei einer der Aktuatoren vorzugsweise kraftlos geschaltet wird und/oder das zweite Kopplungselement in die erste tangentiale Richtung der Rotationsbaugruppe mittels des ersten Aktuators und/oder mittels des zweiten Aktuators der zweiten Kopplungsvorrichtung zu bewegen, wobei einer der Aktuatoren vorzugsweise kraftlos geschaltet wird. Da die Einstellrichtungsanteile der ersten und zweiten Kopplungsbewegung entgegengesetzt gerichtet sind, ist bei der Durchführung einer derartigen Bewegung in tangentialer Richtung vorzugsweise lediglich ein Aktuator aktiv beteiligt, und der andere Aktuator wird kraftlos geschaltet. Somit kann gewährleistet werden, dass die Bewegung eines Aktuators lediglich in Druckrichtung bzw. Hauptkraftrichtung erfolgt. Ferner vorzugsweise wird einer der Aktuatoren nicht kraftlos geschaltet, sondern mit einer Kraft beaufschlagt, die geringer ist als die Kraft des anderen Aktuators, so dass die Stabilität der Kopplungsvorrichtung verbessert sein kann.

Darüber hinaus ist es bevorzugt, dass die Rotorarretiervorrichtung eine Steuerungsvorrichtung umfasst, die angeordnet und ausgebildet ist, das erste Kopplungselement in eine Arretierposition zu bewegen, anschließend das zweite Kopplungselement in eine Freigabeposition und in eine zweite tangentiale Richtung zu bewegen und anschließend das erste Kopplungselement in die erste tangentiale Richtung zu bewegen, das zweite Kopplungselement in eine Arretierposition zu bewegen, anschließend das erste Kopplungselement in eine Freigabeposition und in eine zweite tangentiale Richtung zu bewegen und anschließend das zweite Kopplungselement in die erste tangentiale Richtung zu bewegen. Durch eine derart gesteuerte Rotorarretiervorrichtung kann das Gegenkopplungselement sukzessive in die erste tangentiale Richtung bewegt werden. Somit kann mit vielen kleinen Schritten die Rotationsbaugruppe der Windenergieanlage in die erste tangentiale Richtung bewegt werden. Es ist selbstverständlich, dass diese Bewegungsrichtung auch entgegen der zuvor beschriebenen Drehrichtung erfolgen kann, beispielsweise dass die Rotationsbaugruppe bzw. das Gegenkopplungselement in die zweite tangentiale Richtung bewegt wird und die Bewegung des Kopplungselements in der Freigabeposition wiederum in die erste tangentiale Richtung erfolgt.

In einer besonders vorteilhaften Ausführungsvariante der Rotorarretiervorrichtung umfasst diese eine Steuerungsvorrichtung, die angeordnet und ausgebildet ist, das erste Kopplungselement in eine Arretierposition zu bewegen, anschließend das zweite Kopplungselement in eine Freigabeposition und in eine zweite tangentiale Richtung zu bewegen und anschließend das zweite Kopplungselement in eine Arretierposition zu bewegen. Durch einer derartig angeordnete und ausgebildete Steuerungsvorrichtung kann sichergestellt werden, dass eine Bewegung in tangentialer Richtung lediglich stattfindet, wenn sich beide Kopplungselemente der vorhandenen zwei Kopplungsvorrichtungen in einer Arretierposition befinden. In einer weiteren bevorzugten Ausführungsvariante der Rotorarretiervorrichtung umfasst diese eine Steuerungsvorrichtung, die angeordnet und ausgebildet ist, das Gegenkopplungselement in die erste tangentiale Richtung zu bewegen durch mehrfaches Bewegen der Kopplungselemente gemäß mindestens einer der im Vorherigen beschriebenen Bewegungsabläufe. Eine vorteilhafte Ausbildung einer Steuerungsvorrichtung ergibt sich, wenn diese zwei oder mehrere der im Vorherigen beschriebenen Ausbildungen der Steuerungsvorrichtung aufweist.

Gemäß einem weiteren Aspekt der vorliegenden Erfindung wird die eingangs genannte Aufgabe gelöst durch ein Verfahren zur Arretierung eines Rotors einer Windenergieanlage gemäß Anspruch 11.

Mit diesem Verfahren kann ein auf im Wesentlichen null abgebremster Rotor arretiert werden. Ein auf im Wesentlichen null abgebremster Rotor zeichnet sich insbesondere dadurch aus, dass dieser eine Drehzahl von im Wesentlichen null aufweist. Der auf im Wesentlichen null abgebremste Rotor weist an seiner Rotationsbaugruppe ebenfalls eine Geschwindigkeit bzw. Drehzahl von im Wesentlichen null auf, sodass das mindestens eine Kopplungselement durch den ersten Aktuator und/oder den zweiten Aktuator mittels einer Kopplungsbewegung hin zum Gegenkopplungselement an der Rotationsbaugruppe geführt werden kann und durch entsprechende Heranführung bzw. Verbindung des Kopplungselements mit dem Gegenkopplungselement eine lösbare, vorzugsweise formschlüssige, Verbindung hergestellt wird.

Insbesondere ist es bevorzugt, dass das Verfahren ein Abbremsen und/oder Positionieren des aerodynamischen Rotors umfasst, bevor dieser arretiert wird.

In einer besonders bevorzugten Ausführungsvariante des Verfahrens umfasst dieses Bewegen des Kopplungselements in eine erste tangentiale Richtung der Rotationsbaugruppe mittels des ersten Aktuators und/oder mittels des zweiten Aktuators, wobei einer der Aktuatoren vorzugsweise kraftlos geschaltet wird. Durch diesen Verfahrensschritt besteht die Möglichkeit, dass der Rotor auf eine spezifische Position arretiert wird. Dies geschieht insbesondere dadurch, dass die Rotationsbaugruppe und somit auch der Rotor mittels einer der Aktuatoren gedreht wird. Diese Drehung erfolgt insbesondere dadurch, dass der erste Aktuator und/oder der zweite Aktuator das Gegenkopplungselement in eine tangentiale Richtung der Rotationsbaugruppe bewegt, wobei sich das Kopplungselement währenddessen in einer Arretierposition befindet. Da die Einstellrichtungsanteile der Kopplungsbewegung des ersten Aktuators und des zweiten Aktuators entgegengesetzt sind, ist es besonders bevorzugt, dass einer der Aktuatoren bei dieser Bewegung kraftlos geschaltet wird, sodass die Kraft des einen Aktuators nicht der Kraft des anderen Aktuators entgegengesetzt wird.

Gemäß einem weiteren Aspekt der vorliegenden Erfindung wird die eingangs genannte Aufgabe gelöst durch ein Verfahren zur Arretierung eines Rotors einer Windenergieanlage gemäß Anspruch 13.

Die zweite Rotorarretiervorrichtung umfasst einen dritten Aktuator und einen vierten Aktuator, wobei der dritte Aktuator und der vierte Aktuator im Wesentlichen gleich oder ähnlich ausgebildet sein können, wie der erste Aktuator und/oder der zweite Aktuator der ersten Rotorarretiervorrichtung. Ferner umfasst die zweite Rotorarretiervorrichtung grundsätzlich ebenfalls insgesamt zwei Aktuatoren, nämlich den dritten Aktuator und den vierten Aktuator. Mittels dieses Verfahrens wird der Rotor bzw. die Rotationsbaugruppe mit einem Gegenkopplungselement durch zwei Kopplungselemente arretiert.

Insbesondere ist es bevorzugt, dass das Verfahren ein Abbremsen und/oder Positionieren des aerodynamischen Rotors umfasst, bevor dieser arretiert wird.

Gemäß einer bevorzugten Ausführungsvariante des Verfahrens umfasst dieses Bewegen des ersten Kopplungselements in eine erste tangentiale Richtung der Rotationsbaugruppe mittels des ersten Aktuators und/oder mittels des zweiten Aktuators, wobei einer der Aktuatoren vorzugsweise kraftlos geschaltet wird und/oder Bewegen des zweiten Kopplungselements in die erste tangentiale Richtung der Rotationsbaugruppe mittels des dritten Aktuators und/oder mittels des vierten Aktuators, wobei einer der Aktuatoren vorzugsweise kraftlos geschaltet wird.

Eine weitere bevorzugte Fortbildung des Verfahrens zeichnet sich durch den Verfahrensschritt Bewegen des ersten Kopplungselements in eine Arretierposition, anschließend Bewegen des zweiten Kopplungselements in eine Freigabeposition und in eine zweite tangentiale Richtung und anschließend Bewegen des ersten Kopplungselements in die erste tangentiale Richtung, Bewegen des zweiten Kopplungselements in eine Arretierposition, anschließend Bewegen des ersten Kopplungselements in eine Freigabeposition und in eine zweite tangentiale Richtung und anschließend Bewegen des zweiten Kopplungselements in die erste tangentiale Richtung, aus.

Ferner umfasst das Verfahren vorzugsweise den Schritt Bewegen des ersten Kopplungselements in eine Arretierposition, anschließend Bewegen des zweiten Kopplungselements in eine Freigabeposition und in eine zweite tangentiale Richtung und anschließend Bewegen des zweiten Kopplungselements in eine Arretierposition. Gemäß einer weiteren bevorzugten Ausführungsvariante des Verfahrens umfasst dieses den Schritt Bewegen des Gegenkopplungselements in eine erste tangentiale Richtung durch Wiederholen mindestens einer der Schritte der im Vorhergehenden beschriebenen Ausführungsvarianten.

Die erfindungsgemäßen Verfahren und ihre möglichen Fortbildungen weisen Merkmale bzw. Verfahrensschritte auf, die sie insbesondere dafür geeignet machen, für eine erfindungsgemäße Rotorarretiervorrichtung und ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Rotorarretiervorrichtung verwiesen.

Bevorzugte Ausführungsformen der Erfindung werden beispielhaft anhand der beiliegenden Figuren erläutert. Es zeigen:
- Fig. 1:: eine schematische Ansicht einer beispielhaften Ausführungsform einer Windenergieanlage;
- Fig. 2:: eine schematische Seitenansicht einer beispielhaften Ausführungsform eines Generators einer Windenergieanlage gemäß Figur 1;
- Fig. 3:: eine schematische dreidimensionale Ansicht einer beispielhaften Ausführungsform einer Rotorarretiervorrichtung;
- Fig. 4:: eine dreidimensionale Ansicht eines Ausschnitts einer beispielhaften Ausführungsform einer Rotorarretiervorrichtung.

In den Figuren sind gleiche oder im Wesentlichen funktionsgleiche oder -ähnliche Elemente mit den gleichen Bezugszeichen bezeichnet.

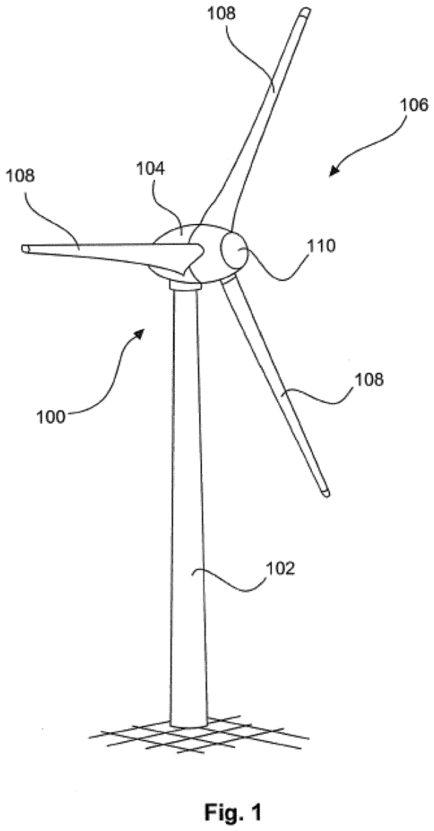

Figur 1 zeigt eine schematische Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106 mit drei Rotorblättern 108 und einem Spinner 110 angeordnet. Der aerodynamische Rotor 106 wird im Einbauzustand und/oder im Betriebszustand durch den Wind in eine Drehbewegung versetzt und treibt dadurch einen Generator in der Gondel 104 an. Der aerodynamische Rotor 106 dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

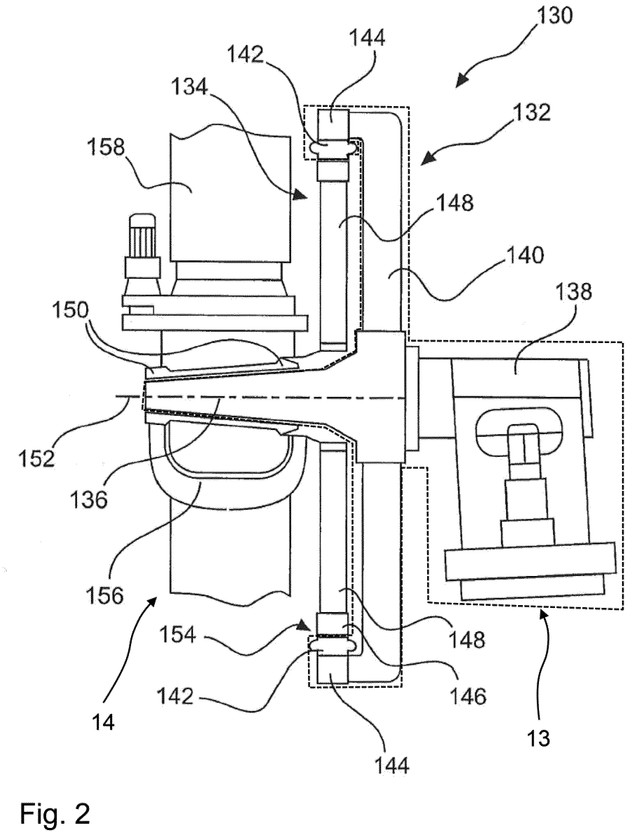

Figur 2 zeigt einen Innenläufer-Generator 130 der Windenergieanlage 100 schematisch in einer Seitenansicht. Er weist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 an dem Statorträger 140 befestigt sind. Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige Millimeter dick ist, insbesondere weniger als 6 mm, aber einen Durchmesser von mehreren Metern aufweist, insbesondere mehr als 4 m. Die Statorblechpakete 142 und die Rotorpolschuhe 146 bilden jeweils einen Ring und sind zusammen auch ringförmig, so dass der Generator 130 ein Ringgenerator ist. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind.

Der Innenläufer-Generator 130 sowie die weiteren gezeigten Elemente der Windenergieanlage 100 umfassen eine Standbaugruppe 13 und eine Rotationsbaugruppe 14, wobei die Standbaugruppe 13 zur Verdeutlichung von einer gestrichelten Linie umgeben ist. Die Standbaugruppe 13 dieser beispielhaften Windenergieanlage umfasst beispielsweise den Maschinenträger 138, den Stator 132 mit Statorträger 140, Statorring 144 und Statorblechpaketen 142, und den Achszapfen 136. Die Rotationsbaugruppe 14 der teilweise gezeigten Windenergieanlage aus Figur 2 umfasst unter anderem den elektrodynamischen Rotor 134 mit dem Rotorträger 148. Diese Elemente sind drehsteif mit dem aerodynamischen Rotor verbunden und weisen vorzugsweise eine gemeinsame Drehachse 152 auf. Gegenüber diesen Elementen der Rotationsbaugruppe sind die Elemente der Standbaugruppe ortsfest angeordnet. Die Standbaugruppe umfasst beispielsweise den Maschinenträger 138, den Stator 132 mit Statorträger 140, Statorring 144 und Statorblechpaketen 142, und den Achszapfen 136. Wie im Folgenden noch beschrieben, können erfindungsgemäße Rotorarretiervorrichtungen zur Arretierung des aerodynamischen Rotors 106 eingesetzt werden.

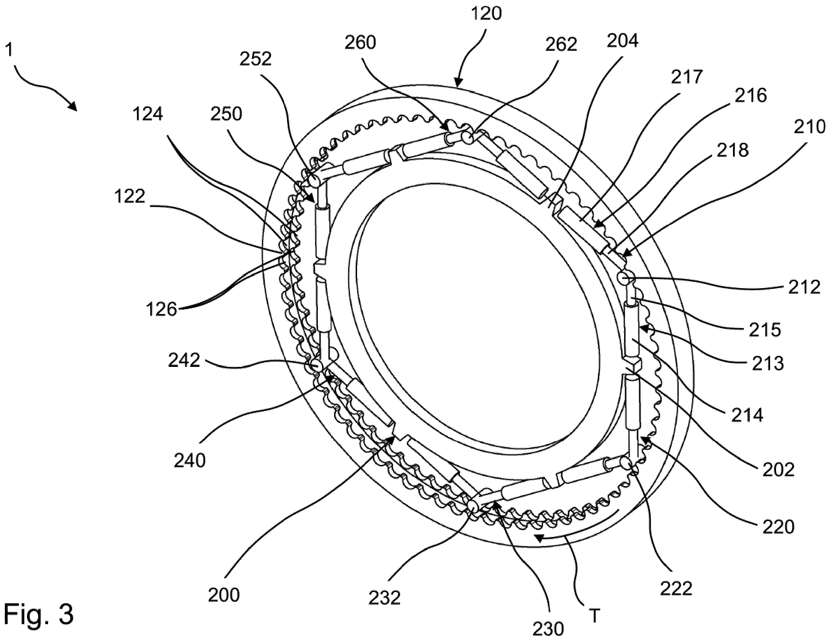

Figur 3 zeigt eine schematische dreidimensionale Ansicht einer beispielhaften Ausführungsform einer Rotorarretiervorrichtung. Figur 3 zeigt insbesondere eine Rotorarretiervorrichtung 1 mit einer ersten Kopplungsvorrichtung 210, einer zweiten Kopplungsvorrichtung 220, einer dritten Kopplungsvorrichtung 230, einer vierten Kopplungsvorrichtung 240, einer fünften Kopplungsvorrichtung 250 und einer sechsten Kopplungsvorrichtung 260, die jeweils an einer relativ zu einer Rotationsbaugruppe ortsfesten Standbaugruppe 200 angeordnet sind. Darüber hinaus weist die Rotorarretiervorrichtung 1 eine Gegenkopplungsvorrichtung 120 auf. Die Standbaugruppe 200 weist eine ringförmige Geometrie auf, die eine Mittelachse aufweist. Die Standbaugruppe 200 weist ferner insgesamt sechs Vorsprünge auf, beispielsweise Vorsprung 202 oder 204, die äquidistant an der äußeren radialen Umfangsfläche der Standbaugruppe angeordnet sind. Koaxial zur Standbaugruppe 200 ist ebenfalls ringförmig ausgebildet die Gegenkopplungsvorrichtung 120 angeordnet, die vorzugsweise an einer nicht dargestellten Rotationsbaugruppe drehsteif angeordnet ist.

Die Gegenkopplungsvorrichtung 120 weist darüber hinaus eine Vielzahl an Gegenkopplungselementen auf, die hier vorliegend als Verzahnungsausnehmungen ausgebildet sind. Exemplarisch sind die Verzahnungsausnehmungen 124 und 126 hier mit einem Bezugszeichen versehen, wobei diese zwei benachbarten Verzahnungsausnehmungen 124, 126 einen Zahn 122 ausbilden. Die Verzahnungsausnehmungen sind an der inneren Umfangsfläche der Gegenkopplungsvorrichtung 120 äquidistant angeordnet. In axialer Richtung sind die Verzahnungsausnehmungen bereichsweise unterbrochen. Der unterbrochene Teil weist einen Radius in Bezug auf die Mittelachse der Gegenkopplungsvorrichtung 120 auf, der größer oder gleich dem Radius von einem Tiefpunkt einer der Verzahnungsausnehmungen zur Mittelachse ist. Somit kann ein zylindrisches Kopplungselement in den Verzahnungsausnehmungen angeordnet werden und wird nicht durch den unterbrochenen Teil beeinflusst.

Alle Verzahnungsausnehmungen an der Gegenkopplungsvorrichtung 120 sind derart ausgebildet, dass Kopplungselemente 212, 222, 232, 242, 252, 262 in diesen Verzahnungsausnehmungen angeordnet werden können. Die Kopplungselemente 212 bis 262 weisen eine zylinderförmige Geometrie auf, wobei die Zylinderachse im Wesentlichen parallel zur Mittelachse der Standbaugruppe 200 und der Gegenkopplungsvorrichtung 120 ausgerichtet ist. Somit können die Kopplungselemente 212 bis 262 mit einem Teil ihrer radialen Umfangsfläche innerhalb der Verzahnungsausnehmungen, welche hier vorliegend halbkreisförmig ausgebildet sind, angeordnet werden. Stellvertretend für alle Kopplungsvorrichtungen 210, 220, 230, 240, 250, 260 wird der detaillierte Aufbau der Kopplungsvorrichtungen anhand der ersten Kopplungsvorrichtung 210 im Folgenden erläutert.

Die Kopplungsvorrichtung 210 weist einen ersten Aktuator 213 und einen zweiten Aktuator 216 auf. Der erste Aktuator 213 umfasst einen Hydraulikzylinder 214 mit einem ausfahrbaren Zylinderelement 215. Analog zum ersten Aktuator 213 weist der zweite Aktuator 216 ebenfalls einen Hydraulikzylinder 217 mit einem ausfahrbaren Zylinderelement 218 auf. Der erste Aktuator 213 erstreckt sich von einem ersten Ende zu einem zweiten Ende. Mit dem ersten Ende ist der erste Aktuator 213 an einem ersten Vorsprung 202 der Standbaugruppe 200 drehbar um eine Achse parallel zur Mittelachse der Standbaugruppe 200 angeordnet. Am zweiten Ende des Aktuators 213, insbesondere an dem Ende des Zylinderelements 215, das dem Hydraulikzylinder 214 abgewandt ist, ist das erste Kopplungselement 212 angeordnet. Der zweite Aktuator 216 erstreckt sich ebenfalls von einem ersten Ende zu einem zweiten Ende. Mit dem ersten Ende ist der zweite Aktuator 216 ebenfalls an der Standbaugruppe 200 angeordnet. Insbesondere ist der zweite Aktuator 216 mit seinem ersten Ende an einem zweiten Vorsprung 204 angeordnet, wobei der zweite Vorsprung 204 benachbart zu dem ersten Vorsprung 202 angeordnet ist. An dem zweiten Ende des zweiten Aktuators 216, insbesondere an dem Ende des Zylinderelements 218, das dem Hydraulikzylinder 217 abgewandt ist, ist der zweite Aktuator 216 ebenfalls mit dem ersten Kopplungselement 212 drehbar verbunden.

Im vollständig eingefahrenen Zustand, das heißt dass die Zylinderelemente 215, 218 weitestgehend innerhalb der Hydraulikzylinder 214, 217 angeordnet sind, sind der erste Aktuator 213 und der zweite Aktuator 216 im Wesentlichen tangential zur Standbaugruppe 200 ausgerichtet. Das Kopplungselement befindet sich dann in einer Freigabeposition und ist insbesondere nicht mit einem der Gegenkopplungselemente, beispielsweise 124, 126, lösbar verbunden. Wenn die Zylinderelemente 215, 218 nun aus den Hydraulikzylindern 214, 217 ausgefahren werden, bewegt sich das Kopplungselement 212 mit einem Kopplungsrichtungsanteil in Richtung des Gegenkopplungselements 120. Bei ausreichendem Ausfahren der Zylinderelemente 215, 218 befindet sich das Kopplungselement 212 bei entsprechender tangentialer Positionierung in einer der Verzahnungsausnehmungen des Gegenkopplungselements 120.

Durch die Anordnung des Kopplungselements 212 in einer der Ausnehmungen des Gegenkopplungselements kann eine sichere Arretierung der Gegenkopplungsvorrichtung 120 relativ zur Standbaugruppe 200 erreicht werden. Dies wird insbesondere erreicht, indem tangentiale Kräfte der Gegenkopplungsvorrichtung über die Kopplungselement in die Aktuatoren geleitet werden und von dort aus auf die Standbaugruppe 200 geleitet werden.

Darüber hinaus kann die Gegenkopplungsvorrichtung 120 mit den vorgesehenen Kopplungsvorrichtungen 210 bis 260 auch relativ zur Standbaugruppe 200 in tangentialer Richtung T gedreht werden. Dies erfolgt vorzugsweise dadurch, dass die ersten Aktuatoren ihre Zylinderelemente ausfahren und die zweiten Aktuatoren der Kopplungsvorrichtung kraftlos geschaltet werden. Insbesondere erfolgt die Drehung dadurch, dass die zweiten Kopplungsvorrichtungen eine geringere tangentiale Kraft auf die Gegenkopplungsvorrichtung ausüben als es die Zylinderelemente der ersten Aktuatoren bewirken. Nachdem die ersten Aktuatoren die Zylinderelemente vollständig ausgefahren haben, kann zunächst keine weitere Drehung der Gegenkopplungsvorrichtung gegenüber der Standbaugruppe 200 erfolgen. Vorzugsweise erfolgt dann sukzessive das Zurücksetzen eines Kopplungselements einer Kopplungsvorrichtung entgegen der Drehrichtung wieder in eine Arretierposition, sodass das Kopplungselement wiederum innerhalb einer Verzahnungsausnehmung angeordnet ist und die Kopplungselemente eine abermalige Bewegung in tangentialer Richtung der gewünschten Drehrichtung ausführen können.

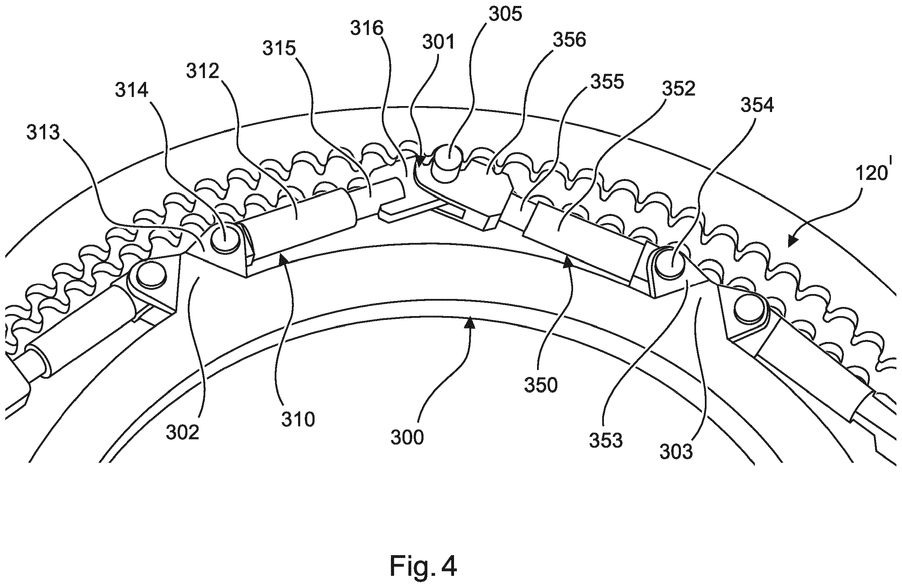

Figur 4 zeigt eine dreidimensionale Ansicht eines Ausschnitts einer beispielhaften Ausführungsform einer Rotorarretiervorrichtung. Die Rotorarretiervorrichtung 1' umfasst eine Kopplungsvorrichtung 301 mit einem ersten Aktuator 310 und einem zweiten Aktuator 350, wobei sich die zwei Aktuatoren 310, 350 analog zur vorherigen Beschreibung von einem ersten Ende zu einem zweiten Ende erstrecken, wobei die ersten Enden der Aktuatoren 310, 350 an der Standbaugruppe an zwei benachbarten Vorsprüngen 302, 303 angeordnet sind und die zweiten Enden jeweils an einem einzelnen Kopplungselement 305 angeordnet sind. Das Kopplungselement 305 befindet sich in einer Arretierposition, in der das Kopplungselement 305 mit einem Gegenkopplungselement einer Gegenkopplungsvorrichtung 120' lösbar verbunden ist. Vorliegend ist diese Verbindung formschlüssig hergestellt, indem das zylinderförmige Kopplungselement 305 in einer halbkreisförmigen Verzahnungsausnehmung angeordnet ist.

Vorliegend ist insbesondere die drehbare Anordnung der Aktuatoren 310, 350 an der Standbaugruppe 300 und an dem Kopplungselement 305 ersichtlich. Die Aktuatoren 310, 350 sind jeweils an ihrem ersten Ende an der Standbaugruppe mit einem Bolzenaufnahmeelement 313, 353 und einem Bolzen 314, 354 befestigt. Die Drehachse ist vorliegend wieder parallel zur Mittelachse der Standbaugruppe 300 ausgerichtet.

Die Aktuatoren 310, 350 weisen insbesondere in einem Bereich angrenzend an das erste Ende jeweils eine vorzugsweise kreisrunde erste Öffnung auf, sind mit diesem Bereich zwischen Öffnungen der Bolzenaufnahmeelemente 313, 353 angeordnet, sodass ein Bolzen in den Öffnungen des Bolzenaufnahmeelements angeordnet werden kann, und somit auch in den ersten Öffnungen der ersten Enden des ersten Aktuators 310 und zweiten Aktuators 350 angeordnet ist und daher nicht-rotatorische Bewegungen der ersten Enden der Aktuatoren 310, 350 relativ zur Standbaugruppe 300 im Wesentlichen verhindert werden. Somit kann eine drehbare Anordnung der Aktuatoren 310, 350 an der Standbaugruppe 300 realisiert werden. Das Kopplungselement 305 ist vorliegend als zylinderförmiges Element ausgebildet und kann vorliegend genutzt, um auch als Bolzen wirkend den ersten Aktuator 310 und den zweiten Aktuator 350 miteinander zu verbinden. Die Gegenkopplungsvorrichtung 120' weist analog zur Gegenkopplungsvorrichtung 120 eine Vielzahl an Gegenkopplungselementen auf, die als halbkreisförmige Verzahnungsausnehmungen ausgebildet sind.

Durch diese Anordnung kann die Gegenkopplungsvorrichtung 120' relativ zur Standbaugruppe 300 gedreht werden. Dies erfolgt insbesondere dadurch, dass eine tangentiale Kraft des einen Aktuators größer ist als die entgegengesetzt gerichtete Tangentialkraft des jeweils anderen Aktuators. Vorzugsweise wird der Aktuator, der nicht für das Drehen der Gegenkopplungsvorrichtung 120' verwendet wird, kraftlos geschaltet. Somit kann eine vorzugsweise sukzessive Drehung der Gegenkopplungsvorrichtung 120' gegenüber der Standbaugruppe 300 erreicht werden.

Erfindungsgemäße Rotorarretiervorrichtungen 1, 1' gemäß der Figur 3 und der Figur 4 können auch zur Arretierung des aerodynamischen Rotors 106 gemäß Figur 1 eingesetzt werden, indem ein Gegenkopplungselement 124, 126 drehsteif der Rotationsbaugruppe und mindestens eine Kopplungsvorrichtung 210, 220, 230, 240, 250, 260, 301 an der Standbaugruppe angeordnet wird. Beispielsweise kann das Gegenkopplungselement 124, 126 an der dem Maschinenträger 138 zugewandten Stirnseite des Rotorträgers 148 drehfest angeordnet werden. Die mindestens eine Kopplungsvorrichtung 210, 220, 230, 240, 250, 260, 301 ist dann vorzugsweise an der dem Maschinenträger abgewandten Stirnseite des Statorträgers 140 angeordnet, so dass das mindestens eine Kopplungselement 212, 222, 232, 242, 252, 262, 305 der mindestens einen Kopplungsvorrichtung 210, 220, 230, 240, 250, 260, 301 lösbar mit einem Gegenkopplungselement 124, 126 der Gegenkopplungsvorrichtung 120, 120' verbunden werden kann.

Die in den Figuren 3 und 4 gezeigten Rotorarretiervorrichtungen 1, 1' können zur Arretierung eines aerodynamischen Rotors 106 an Statorträgern 140 und Rotorträgern 148 von Innenläufer-Generatoren und auch von Außenläufer- Generatoren angeordnet werden.

Insbesondere dadurch, dass die Aktuatoren, welche vorzugsweise als hydraulische Elemente ausgebildet sind, an der Standbaugruppe angeordnet sind, können die Versorgungsleitungen und Steuerungseinrichtungen für diese ohne große Schwierigkeiten angeordnet werden. Darüber hinaus befinden sich viele Elemente an einer Rotationsbaugruppe einer Windenergieanlage, an denen eine Gegenkopplungsvorrichtung 120, 120' angeordnet werden können. Somit kann ein sicheres Drehen eines Rotors einer Windenergieanlage erreicht werden, wobei die vorgeschlagene Rotorarretiervorrichtung kostengünstig ausgestaltet werden kann. Darüber hinaus bietet diese durch die Vielzahl an anzuordnenden Kopplungsvorrichtungen einen hohen Sicherheitsfaktor, der die Montage und Demontage, Wartungs- und Reparaturarbeiten sowie sonstige Arbeiten im Bereich des Rotors und/oder der Gondel vereinfacht und den Aufwand zur Sicherstellung eines geregelten Betriebs reduziert.

### BEZUGSZEICHEN

- 1, 1': Rotorarretiervorrichtung
- 13: Standbaugruppe
- 14: Rotationsbaugruppe
- 100: Windenergieanlage
- 102: Turm
- 104: Gondel
- 106: Rotor
- 108: Rotorblatt
- 110: Spinner
- 120, 120': Gegenkopplungsvorrichtung
- 122: Zahn
- 124: erste Verzahnungsausnehmung
- 126: zweite Verzahnungsausnehmung
- 130: Innenläufer-Generator
- 132: Stator
- 134: elektrodynamischer Rotor
- 136: Achszapfen
- 138: Maschinenträger
- 140: Statorträger
- 142: Statorblechpakete
- 144: Statorring
- 146: Rotorpolschuhe
- 148: Rotorträger
- 150: Lager
- 152: Drehachse
- 154: Luftspalt
- 156: Rotornabe
- 158: Rotorblatt
- 200, 300: Standbaugruppe
- 202: erster Vorsprung
- 204: zweiter Vorsprung
- 210: erste Kopplungsvorrichtung
- 212: erstes Kopplungselement
- 213: erster Aktuator
- 214: Hydraulikzylinder
- 215: Zylinderelement
- 216: zweiter Aktuator
- 217: Hydraulikzylinder
- 218: Zylinderelement
- 220: zweite Kopplungsvorrichtung
- 222: zweites Kopplungselement
- 230: dritte Kopplungsvorrichtung
- 232: drittes Kopplungselement
- 240: vierte Kopplungsvorrichtung
- 242: viertes Kopplungselement
- 250: fünfte Kopplungsvorrichtung
- 252: fünftes Kopplungselement
- 260: sechste Kopplungsvorrichtung
- 262: sechstes Kopplungselement
- 301: Kopplungsvorrichtung
- 302, 303: Vorsprünge
- 305: Kopplungselement
- 310: erster Aktuator
- 312: Hydraulikzylinder
- 313: Bolzenaufnahmeelement
- 314: Bolzen
- 315: Zylinderelement
- 316: Anordnungselement
- 350: zweiter Aktuator
- 352: Hydraulikzylinder
- 353: Bolzenaufnahmeelement
- 354: Bolzen
- 355: Zylinderelement
- 356: Anordnungselement
- T: tangentiale Richtung

## Patentansprüche

1. Windenergieanlage (100) mit einem Rotor (106), einer mit dem Rotor drehsteif verbundenen Rotationsbaugruppe und einer relativ zur Rotationsbaugruppe ortsfesten Standbaugruppe (200, 300), umfassend eine Rotorarretiervorrichtung (1, 1'), die Rotorarretiervorrichtung (1, 1') umfassend
- mindestens eine Kopplungsvorrichtung (210, 220, 230, 240, 250, 260, 301), die an der relativ zur Rotationsbaugruppe ortsfesten Standbaugruppe (200, 300) der Windenergieanlage (100) angeordnet ist, mit
∘ einem ersten Aktuator (213, 310) für eine erste Kopplungsbewegung,
∘ einem zweiten Aktuator (216, 350) für eine zweite Kopplungsbewegung, und
∘ einem Kopplungselement (212, 222, 232, 242, 252, 262, 305), welches mit dem ersten und dem zweiten Aktuator verbunden ist,
- ein Gegenkopplungselement (124, 126), das an der Rotationsbaugruppe angeordnet ist,
- wobei das Kopplungselement und das Gegenkopplungselement in einer Arretierposition der Kopplungsvorrichtung lösbar, vorzugsweise formschlüssig, verbunden sind, und
- wobei die Kopplungsvorrichtung von einer Freigabeposition, in der eine Verbindung des Kopplungselements (212, 222, 232, 242, 252, 262, 305) und des Gegenkopplungselements (124, 126) gelöst ist, in die Arretierposition mittels der ersten Kopplungsbewegung des ersten Aktuators (213, 310) und mittels der zweiten Kopplungsbewegung des zweiten Aktuators (216, 350) bringbar ist, und
- wobei die erste Kopplungsbewegung einen ersten Einstellrichtungsanteil aufweist und die zweite Kopplungsbewegung einen zweiten Einstellrichtungsanteil aufweist, wobei der erste Einstellrichtungsanteil und der zweite Einstellrichtungsanteil entgegengesetzt gerichtet sind.

2. Windenergieanlage (100) gemäß dem vorhergehenden Anspruch, wobei die erste Kopplungsbewegung einen ersten Kopplungsrichtungsanteil aufweist und die zweite Kopplungsbewegung einen zweiten Kopplungsrichtungsanteil aufweist, wobei der erste Kopplungsrichtungsanteil und der zweite Kopplungsrichtungsanteil gleichgerichtet sind, wobei der erste Kopplungsrichtungsanteil und der zweite Kopplungsrichtungsanteil vorzugsweise von dem Kopplungselement (212, 222, 232, 242, 252, 262, 305) zum Gegenkopplungselement (124, 126) gerichtet ist.

3. Windenergieanlage (100) gemäß mindestens einem der vorhergehenden Ansprüche, wobei die Kopplungsvorrichtung (210, 220, 230, 240, 250, 260, 301) von der Arretierposition in die Freigabeposition mittels einer ersten Entkopplungsbewegung des ersten Aktuators und mittels einer zweiten Entkopplungsbewegung des zweiten Aktuators (216, 350) bringbar ist, und/oder
wobei die erste Entkopplungsbewegung einen ersten Freistellrichtungsanteil aufweist und die zweite Entkopplungsbewegung einen zweiten Freistellrichtungsanteil aufweist, wobei der erste Freistellrichtungsanteil und der zweite Freistellrichtungsanteil entgegengesetzt gerichtet sind, und/oder
wobei die erste Entkopplungsbewegung einen ersten Entkopplungsrichtungsanteil aufweist und die zweite Entkopplungsbewegung einen zweiten Entkopplungsrichtungsanteil aufweist, wobei der erste Entkopplungsrichtungsanteil und der zweite Entkopplungsrichtungsanteil gleichgerichtet sind.

4. Windenergieanlage (100) gemäß mindestens einem der vorhergehenden Ansprüche, wobei der erste Aktuator (213, 310) und der zweite Aktuator (216, 350) jeweils unabhängig voneinander ansteuerbar ausgebildet sind.

5. Windenergieanlage (100) gemäß mindestens einem der vorhergehenden Ansprüche, wobei der erste Aktuator (213, 310) und/oder der zweite Aktuator (216, 350) einen ausfahrbaren Zylinder (215, 218, 315, 355) umfasst bzw. umfassen, und/oder
der erste Aktuator (213, 310) und/oder der zweite Aktuator (216, 350) einen Hydraulikzylinder (312, 352, 214, 217) umfasst bzw. umfassen oder als Hydraulikzylinder ausgebildet ist bzw. sind, wobei die Hydraulikflüssigkeit vorzugsweise Wasser ist.

6. Windenergieanlage (100) gemäß mindestens einem der vorhergehenden Ansprüche, wobei der erste Aktuator (213, 310) und/oder der zweite Aktuator (216, 350) drehbar an der Standbaugruppe (200, 300) anordenbar ist bzw. sind, und/oder
wobei der erste Aktuator und/oder der zweite Aktuator drehbar mit dem Kopplungselement (212, 222, 232, 242, 252, 262, 305) verbunden ist bzw. sind.

7. Windenergieanlage (100) gemäß mindestens einem der vorhergehenden Ansprüche, wobei das Gegenkopplungselement (124, 126) an einer Gegenkopplungsvorrichtung (120, 120`), die vorzugsweise ringförmig ausgebildet ist, angeordnet ist, und wobei die Gegenkopplungsvorrichtung an der Rotationsbaugruppe anordenbar ist, und/oder wobei das Gegenkopplungselement als Verzahnungsausnehmung ausgebildet ist, und/oder wobei das als Verzahnungsausnehmung ausgebildete Gegenkopplungselement (124, 126) im Wesentlichen eine halbkreisförmige Geometrie aufweist, und/oder das Kopplungselement (212, 222, 232, 242, 252, 262, 305) eine zylindrische Geometrie aufweist.

8. Windenergieanlage (100) gemäß mindestens einem der vorhergehenden Ansprüche, umfassend eine Vielzahl an Gegenkopplungselementen (124, 126), die vorzugsweise als halbkreisförmige Verzahnungsausnehmungen ausgebildet sind und ferner vorzugsweise kleiner 45 Bogengrad, und/oder kleiner 30 Bogengrad, und/oder kleiner 25 Bogengrad, und/oder kleiner 20 Bogengrad, und/oder kleiner 15 Bogengrad, und/oder kleiner 10 Bogengrad, und/oder kleiner 7,5 Bogengrad, und/oder kleiner 5 Bogengrad, und/oder kleiner 2 Bogengrad, und/oder kleiner 1 Bogengrad voneinander beabstandet sind.

9. Windenergieanlage (100) gemäß mindestens einem der vorhergehenden Ansprüche,
- umfassend eine Steuerungsvorrichtung, die angeordnet und ausgebildet ist, das Kopplungselement (212, 222, 232, 242, 252, 262, 305) mittels des ersten Aktuators (213, 310) und mittels des zweiten Aktuators (216, 350) von einer Freigabeposition in eine Arretierposition zu bewegen, wobei das Kopplungselement mit dem Gegenkopplungselement (124, 126) in der Arretierposition lösbar, vorzugsweise formschlüssig, verbunden ist,
und/oder
- umfassend eine Steuerungsvorrichtung, die angeordnet und ausgebildet ist, das Kopplungselement (212, 222, 232, 242, 252, 262, 305) in eine erste tangentiale Richtung der Rotationsbaugruppe mittels des ersten Aktuators (213, 310) und/oder mittels des zweiten Aktuators (216, 350) zu bewegen, wobei einer der Aktuatoren vorzugsweise kraftlos geschaltet wird.

10. Windenergieanlage (100) gemäß mindestens einem der vorhergehenden Ansprüche,
- umfassend eine Steuerungsvorrichtung, die angeordnet und ausgebildet ist, das erste Kopplungselement (212, 222, 232, 242, 252, 262, 305) mittels des ersten Aktuators (213, 310) und mittels des zweiten Aktuators (216, 350) einer ersten Kopplungsvorrichtung (210, 220, 230, 240, 250, 260, 301) und/oder das zweite Kopplungselement (212, 222, 232, 242, 252, 262, 305) mittels des ersten Aktuators und mittels des zweiten Aktuators einer zweiten Kopplungsvorrichtung (210, 220, 230, 240, 250, 260, 301) von einer Freigabeposition in eine Arretierposition zu bewegen, wobei das erste Kopplungselement und/oder das zweite Kopplungselement mit einem, zwei oder mehreren Gegenkopplungselementen (124, 126) in der Arretierposition lösbar, vorzugsweise formschlüssig, verbunden ist bzw. sind,
und/oder
- umfassend eine Steuerungsvorrichtung, die angeordnet und ausgebildet ist, das erste Kopplungselement (212, 222, 232, 242, 252, 262, 305) in eine erste tangentiale Richtung der Rotationsbaugruppe mittels des ersten Aktuators (213, 310) und/oder mittels des zweiten Aktuators (216, 350) der ersten Kopplungsvorrichtung (210, 220, 230, 240, 250, 260, 301) zu bewegen, wobei einer der Aktuatoren vorzugsweise kraftlos geschaltet wird und/oder das zweite Kopplungselement (212, 222, 232, 242, 252, 262, 305) in die erste tangentiale Richtung der Rotationsbaugruppe mittels des ersten Aktuators (213, 310) und/oder mittels des zweiten Aktuators (216, 350) der zweiten Kopplungsvorrichtung (210, 220, 230, 240, 250, 260, 301) zu bewegen, wobei einer der Aktuatoren vorzugsweise kraftlos geschaltet wird,
und/oder
- umfassend eine Steuerungsvorrichtung, die angeordnet und ausgebildet ist, das erste Kopplungselements (212, 222, 232, 242, 252, 262, 305) in eine Arretierposition zu bewegen, anschließend das zweite Kopplungselement (212, 222, 232, 242, 252, 262, 305) in eine Freigabeposition und in eine zweite tangentiale Richtung zu bewegen, und anschließend das erste Kopplungselement in die erste tangentiale Richtung zu bewegen, das zweite Kopplungselement in eine Arretierposition zu bewegen, anschließend das erste Kopplungselement in eine Freigabeposition und in eine zweite tangentiale Richtung zu bewegen, und anschließend das zweite Kopplungselement in die erste tangentiale Richtung zu bewegen.

11. Verfahren zur Arretierung eines Rotors (106) einer Windenergieanlage (100) mit einer mit dem Rotor drehsteif verbundenen Rotationsbaugruppe, insbesondere einer Windenergieanlage gemäß mindestens einem der vorhergehenden Ansprüche, umfassend
- Bereitstellen einer Rotorarretiervorrichtung (1, 1') umfassend,
o mindestens eine Kopplungsvorrichtung (210, 220, 230, 240, 250, 260, 301), die an einer relativ zur Rotationsbaugruppe ortsfesten Standbaugruppe (200, 300) der Windenergieanlage (100) angeordnet ist, mit
▪ einem ersten Aktuator (213, 310) für eine erste Kopplungsbewegung,
▪ einem zweiten Aktuator (216, 350) für eine zweite Kopplungsbewegung, und
▪ einem Kopplungselement (212, 222, 232, 242, 252, 262, 305), welches mit dem ersten und dem zweiten Aktuator verbunden ist,
∘ ein Gegenkopplungselement (124, 126), das an der Rotationsbaugruppe angeordnet ist,
∘ wobei das Kopplungselement und das Gegenkopplungselement in einer Arretierposition der Kopplungsvorrichtung lösbar, vorzugsweise formschlüssig, verbunden sind, und
∘ wobei die Kopplungsvorrichtung von einer Freigabeposition, in der eine Verbindung des Kopplungselements (212, 222, 232, 242, 252, 262, 305) und des Gegenkopplungselements (124, 126) gelöst ist, in die Arretierposition mittels der ersten Kopplungsbewegung des ersten Aktuators (213, 310) und mittels der zweiten Kopplungsbewegung des zweiten Aktuators (216, 350) bringbar ist, und
o wobei die erste Kopplungsbewegung einen ersten Einstellrichtungsanteil aufweist und die zweite Kopplungsbewegung einen zweiten Einstellrichtungsanteil aufweist, wobei der erste Einstellrichtungsanteil und der zweite Einstellrichtungsanteil entgegengesetzt gerichtet sind,
- Bewegen des Kopplungselements (212, 222, 232, 242, 252, 262, 305) mittels des ersten Aktuators (213, 310) und mittels des zweiten Aktuators (216, 350) von der Freigabeposition in die Arretierposition, wobei das erste Kopplungselement mit dem Gegenkopplungselement (124, 126) in der Arretierposition lösbar, vorzugsweise formschlüssig, verbunden ist.

12. Verfahren zum Bewegen eines Rotors (106) einer Windenergieanlage (100) mit einer mit dem Rotor drehsteif verbundenen Rotationsbaugruppe, insbesondere einer Windenergieanlage gemäß mindestens einem der vorhergehenden Ansprüche 1-10, umfassend
- Arretieren eines Rotors gemäß dem vorhergehenden Anspruch,
- Bewegen des Kopplungselements in eine erste tangentiale Richtung der Rotationsbaugruppe mittels des ersten Aktuators (213, 310) und/oder mittels des zweiten Aktuators (216, 350), wobei einer der Aktuatoren vorzugsweise kraftlos geschaltet wird.

13. Verfahren zur Arretierung eines Rotors (106) einer Windenergieanlage (100) mit einer mit dem Rotor drehsteif verbundenen Rotationsbaugruppe, insbesondere einer Windenergieanlage gemäß mindestens einem der vorhergehenden Ansprüche 1-10, umfassend
- Bereitstellen einer ersten Rotorarretiervorrichtung (1, 1') umfassend
-- mindestens eine Kopplungsvorrichtung (210, 220, 230, 240, 250, 260, 301), die an einer relativ zur Rotationsbaugruppe ortsfesten Standbaugruppe (200, 300) der Windenergieanlage (100) angeordnet ist, mit
--- einem ersten Aktuator (213, 310) für eine erste Kopplungsbewegung,
--- einem zweiten Aktuator (216, 350) für eine zweite Kopplungsbewegung, und
--- einem ersten Kopplungselement (212, 222, 232, 242, 252, 262, 305), welches mit dem ersten und dem zweiten Aktuator verbunden ist,
-- ein Gegenkopplungselement (124, 126), das an der Rotationsbaugruppe angeordnet ist,
-- wobei das erste Kopplungselement und das Gegenkopplungselement in einer Arretierposition der Kopplungsvorrichtung lösbar, vorzugsweise formschlüssig, verbunden sind, und
-- wobei die Kopplungsvorrichtung von einer Freigabeposition, in der eine Verbindung des ersten Kopplungselements (212, 222, 232,242, 252, 262, 305) und des Gegenkopplungselements (124, 126) gelöst ist, in die Arretierposition mittels der ersten Kopplungsbewegung des ersten Aktuators (213, 310) und mittels der zweiten Kopplungsbewegung des zweiten Aktuators (216, 350) bringbar ist, und
-- wobei die erste Kopplungsbewegung einen ersten Einstellrichtungsanteil aufweist und die zweite Kopplungsbewegung einen zweiten Einstellrichtungsanteil aufweist, wobei der erste Einstellrichtungsanteil und der zweite Einstellrichtungsanteil entgegengesetzt gerichtet sind, und
- Bereitstellen einer zweiten Rotorarretiervorrichtung (1, 1') umfassend
-- mindestens eine Kopplungsvorrichtung (210, 220, 230, 240, 250, 260, 301), die an einer relativ zur Rotationsbaugruppe ortsfesten Standbaugruppe (200, 300) der Windenergieanlage (100) angeordnet ist, mit
--- einem dritten Aktuator (213, 310) für eine dritte Kopplungsbewegung,
--- einem vierten Aktuator (216, 350) für eine vierte Kopplungsbewegung, und
--- einem zweiten Kopplungselement (212, 222, 232, 242, 252, 262, 305), welches mit dem dritten und dem vierten Aktuator verbunden ist,
-- ein Gegenkopplungselement (124, 126), das an der Rotationsbaugruppe angeordnet ist,
-- wobei das zweite Kopplungselement und das Gegenkopplungselement in einer Arretierposition der Kopplungsvorrichtung lösbar, vorzugsweise formschlüssig, verbunden sind, und
-- wobei die Kopplungsvorrichtung von einer Freigabeposition, in der eine Verbindung des zweiten Kopplungselements (212, 222, 232,242, 252, 262, 305) und des Gegenkopplungselements (124, 126) gelöst ist, in die Arretierposition mittels der dritten Kopplungsbewegung des dritten Aktuators (213, 310) und mittels der vierten Kopplungsbewegung des vierten Aktuators (216, 350) bringbar ist, und
-- wobei die dritte Kopplungsbewegung einen dritten Einstellrichtungsanteil aufweist und die vierte Kopplungsbewegung einen vierten Einstellrichtungsanteil aufweist, wobei der dritte Einstellrichtungsanteil und der vierte Einstellrichtungsanteil entgegengesetzt gerichtet sind,
- Bewegen des ersten Kopplungselements mittels des ersten Aktuators und mittels des zweiten Aktuators und/oder Bewegen des zweiten Kopplungselements mittels des dritten Aktuators und mittels des vierten Aktuators von der Freigabeposition in die Arretierposition, wobei das erste Kopplungselement und/oder das zweite Kopplungselement mit dem Gegenkopplungselement (124, 126) in der Arretierposition lösbar, vorzugsweise formschlüssig, verbunden ist bzw. sind.

14. Verfahren zum Bewegen eines Rotors (106) einer Windenergieanlage (100) mit einer mit dem Rotor drehsteif verbundenen Rotationsbaugruppe, insbesondere einer Windenergieanlage gemäß mindestens einem der vorhergehenden Ansprüche 1-10, umfassend
- Arretieren eines Rotors (106) gemäß dem vorhergehenden Anspruch,
- Bewegen des ersten Kopplungselements (212, 222, 232, 242, 252, 262, 305) in eine erste tangentiale Richtung der Rotationsbaugruppe mittels des ersten Aktuators (213, 310) und/oder mittels des zweiten Aktuators (216, 350), wobei einer der Aktuatoren vorzugsweise kraftlos geschaltet wird, und/oder
- Bewegen des zweiten Kopplungselements (212, 222, 232, 242, 252, 262, 305) in die erste tangentiale Richtung der Rotationsbaugruppe mittels des dritten Aktuators und/oder mittels des vierten Aktuators, wobei einer der Aktuatoren vorzugsweise kraftlos geschaltet wird.

## Claims

1. A wind turbine (100) having a rotor (106), a rotation assembly which is connected to the rotor in a rotationally rigid manner, and a static assembly (200, 300) which is positionally fixed relative to the rotation assembly, comprising a rotor arresting device (1, 1') the rotor arresting device (1, 1')comprising
- at least one coupling device (210, 220, 230, 240, 250, 260, 301), which is arranged on the static assembly (200, 300), which is positionally fixed relative to the rotation assembly, of the wind turbine (100), having
∘ a first actuator (213, 310) for a first coupling movement,
∘ a second actuator (216, 350) for a second coupling movement, and
∘ a coupling element (212, 222, 232, 242, 252, 262, 305) which is connected to the first and the second actuator,
- a counterpart coupling element (124, 126) which is arranged on the rotation assembly,
- wherein the coupling element and the counterpart coupling element are releasably connected, preferably in a form-fitting manner, in an arresting position of the coupling device, and
- wherein the coupling device can be brought from a release position, in which a connection of the coupling element (212, 222, 232, 242, 252, 262, 305) and the counterpart coupling element (124, 126) is released, into the arresting position by means of the first coupling movement of the first actuator (213, 310) and by means of the second coupling movement of the second actuator (216, 350), and
- wherein the first coupling movement has a first setting direction component and the second coupling movement has a second setting direction component, wherein the first setting direction component and the second setting direction component are directed in opposite directions.

2. The wind turbine (100) as claimed in the preceding claim, wherein
the first coupling movement has a first coupling direction component and the second coupling movement has a second coupling direction component, wherein the first coupling direction component and the second coupling direction component are directed in the same direction, wherein the first coupling direction component and the second coupling direction component is preferably directed from the coupling element (212, 222, 232, 242, 252, 262, 305) to the counterpart coupling element (124, 126).

3. The wind turbine (100) as claimed in at least one of the preceding claims, wherein the coupling device (210, 220, 230, 240, 250, 260, 301) can be brought from the arresting position into the release position by means of a first decoupling movement of the first actuator and by means of a second decoupling movement of the second actuator (216, 350), and/or
wherein the first decoupling movement has a first release direction component and the second decoupling movement has a second release direction component, wherein the first release direction component and the second release direction component are directed in opposite directions, and/or
wherein the first decoupling movement has a first decoupling direction component and the second decoupling movement has a second decoupling direction component, wherein the first decoupling direction component and the second decoupling direction component are directed in the same direction.

4. The wind turbine (100) as claimed in at least one of the preceding claims, wherein the first actuator (213, 310) and the second actuator (216, 350) are each designed to be activatable independently of one another.

5. The wind turbine (100) as claimed in at least one of the preceding claims, wherein the first actuator (213, 310) and/or the second actuator (216, 350) comprise or comprises an extendable cylinder (215, 218, 315, 355), and/or the first actuator (213, 310) and/or the second actuator (216, 350) comprise or comprises a hydraulic cylinder (312, 352, 214, 217) or are or is designed as a hydraulic cylinder, wherein the hydraulic fluid is preferably water.

6. The wind turbine (100) as claimed in at least one of the preceding claims, wherein the first actuator (213, 310) and/or the second actuator (216, 350) can be rotatably arranged on the static assembly (200, 300), and/or wherein the first actuator and/or the second actuator are or is rotatably connected to the coupling element (212, 222, 232, 242, 252, 262, 305).

7. The wind turbine (100) as claimed in at least one of the preceding claims, wherein the counterpart coupling element (124, 126) is arranged on a counterpart coupling device (120, 120`), which is preferably ring-shaped, and wherein the counterpart coupling device can be arranged on the rotation assembly, and/or wherein the counterpart coupling element is designed as a toothing recess, and/or wherein the counterpart coupling element (124, 126) designed as a toothing recess substantially has a semicircular geometry, and/or the coupling element (212, 222, 232, 242, 252, 262, 305) has a cylindrical geometry.

8. The wind turbine (100) as claimed in at least one of the preceding claims, comprising a plurality of counterpart coupling elements (124, 126) which are preferably designed as semicircular toothing recesses and are furthermore spaced apart from one another by preferably less than 45 degrees, and/or less than 30 degrees, and/or less than 25 degrees, and/or less than 20 degrees, and/or less than 15 degrees, and/or less than 10 degrees, and/or less than 7.5 degrees, and/or less than 5 degrees, and/or less than 2 degrees, and/or less than 1 degree.

9. The wind turbine (100) as claimed in at least one of the preceding claims,
- comprising a control device which is arranged and designed to move the coupling element (212, 222, 232, 242, 252, 262, 305) by means of the first actuator (213, 310) and by means of the second actuator (216, 350) from a release position into an arresting position, wherein the coupling element is releasably connected, preferably in a form-fitting manner, to the counterpart coupling element (124, 126) in the arresting position,
and/or
- comprising a control device which is arranged and designed to move the coupling element (212, 222, 232, 242, 252, 262, 305) in a first tangential direction of the rotation assembly by means of the first actuator (213, 310) and/or by means of the second actuator (216, 350), wherein one of the actuators is preferably switched to a force-free state.

10. The wind turbine (100) as claimed in at least one of the preceding claims,
- comprising a control device which is arranged and designed to move the first coupling element (212, 222, 232, 242, 252, 262, 305) by means of the first actuator (213, 310) and by means of the second actuator (216, 350) of a first coupling device (210, 220, 230, 240, 250, 260, 301) and/or the second coupling element (212, 222, 232, 242, 252, 262, 305) by means of the first actuator and by means of the second actuator of a second coupling device (210, 220, 230, 240, 250, 260, 301) from a release position into an arresting position, wherein the first coupling element and/or the second coupling element are or is releasably connected, preferably in a form-fitting manner, to one, two or more counterpart coupling elements (124, 126) in the arresting position, and/or
- comprising a control device which is arranged and designed to move the first coupling element (212, 222, 232, 242, 252, 262, 305) in a first tangential direction of the rotation assembly by means of the first actuator (213, 310) and/or by means of the second actuator (216, 350) of the first coupling device (210, 220, 230, 240, 250, 260, 301), wherein one of the actuators is preferably switched to a force-free state, and/or to move the second coupling element (212, 222, 232, 242, 252, 262, 305) in the first tangential direction of the rotation assembly by means of the first actuator (213, 210) and/or by means of the second actuator (216, 350) of the second coupling device (210, 220, 230, 240, 250, 260, 301), wherein one of the actuators is preferably switched to a force-free state,
and/or
- comprising a control device which is arranged and designed to move the first coupling element (212, 222, 232, 242, 252, 262, 305) into an arresting position, then to move the second coupling element (212, 222, 232, 242, 252, 262, 305) into a release position and in a second tangential direction, and then to move the first coupling element in the first tangential direction, to move the second coupling element into an arresting position, then to move the first coupling element into a release position and in a second tangential direction, and then to move the second coupling element in the first tangential direction.

11. A method for arresting a rotor (106) of a wind turbine (100) with a rotation assembly which is connected to a rotor in a rotationally rigid manner, in particular a wind turbine as claimed in at least one of the preceding claims, comprising
- providing a rotor arresting device (1, 1') comprising,
- at least one coupling device (210, 220, 230, 240, 250, 260, 301), which is arranged on a static assembly (200, 300), which is positionally fixed relative to the rotation assembly, of the wind turbine (100), having
∘ a first actuator (213, 310) for a first coupling movement,
∘ a second actuator (216, 350) for a second coupling movement, and
∘ a coupling element (212, 222, 232, 242, 252, 262, 305) which is connected to the first and the second actuator,
- a counterpart coupling element (124, 126) which is arranged on the rotation assembly,
- wherein the coupling element and the counterpart coupling element are releasably connected, preferably in a form-fitting manner, in an arresting position of the coupling device, and
- wherein the coupling device can be brought from a release position, in which a connection of the coupling element (212, 222, 232, 242, 252, 262, 305) and the counterpart coupling element (124, 126) is released, into the arresting position by means of the first coupling movement of the first actuator (213, 310) and by means of the second coupling movement of the second actuator (216, 350), and
- wherein the first coupling movement has a first setting direction component and the second coupling movement has a second setting direction component, wherein the first setting direction component and the second setting direction component are directed in opposite directions,
- moving the coupling element (212, 222, 232, 242, 252, 262, 305) by means of the first actuator (213, 310) and by means of the second actuator (216, 305) from the release position into the arresting position, wherein the first coupling element is releasably connected, preferably in a form-fitting manner, to the counterpart coupling element (124, 126) in the arresting position.

12. A method for moving a rotor (106) of a wind turbine (100) with a rotation assembly which is connected to a rotor in a rotationally rigid manner, in particular a wind turbine as claimed in at least one of the preceding claims 1-10, comprising
- arresting a rotor as claimed in the preceding claim,
- moving the coupling element in a first tangential direction of the rotation assembly by means of the first actuator (213, 310) and/or by means of the second actuator (216, 305), wherein one of the actuators is preferably switched to a force-free state.

13. A method for arresting a rotor (106) of a wind turbine (100) with a rotation assembly which is connected to a rotor in a rotationally rigid manner, in particular a wind turbine as claimed in at least one of the preceding claims 1-10, comprising
- providing a first rotor arresting device (1, 1') comprising
- at least one coupling device (210, 220, 230, 240, 250, 260, 301), which is arranged on a static assembly (200, 300), which is positionally fixed relative to the rotation assembly, of the wind turbine (100), having
∘ a first actuator (213, 310) for a first coupling movement,
∘ a second actuator (216, 350) for a second coupling movement, and
∘ a first coupling element (212, 222, 232, 242, 252, 262, 305) which is connected to the first and the second actuator,
- a counterpart coupling element (124, 126) which is arranged on the rotation assembly,
- wherein the first coupling element and the counterpart coupling element are releasably connected, preferably in a form-fitting manner, in an arresting position of the coupling device, and
- wherein the coupling device can be brought from a release position, in which a connection of the first coupling element (212, 222, 232, 242, 252, 262, 305) and the counterpart coupling element (124, 126) is released, into the arresting position by means of the first coupling movement of the first actuator (213, 310) and by means of the second coupling movement of the second actuator (216, 350), and
- wherein the first coupling movement has a first setting direction component and the second coupling movement has a second setting direction component, wherein the first setting direction component and the second setting direction component are directed in opposite directions,
, and
- providing a second rotor arresting device (1, 1') comprising
- at least one coupling device (210, 220, 230, 240, 250, 260, 301), which is arranged on a static assembly (200, 300), which is positionally fixed relative to the rotation assembly, of the wind turbine (100), having
∘ a third actuator (213, 310) for a third coupling movement,
∘ a fourth actuator (216, 350) for a fourth coupling movement, and
∘ a second coupling element (212, 222, 232, 242, 252, 262, 305) which is connected to the third and the fourth actuator,
- a counterpart coupling element (124, 126) which is arranged on the rotation assembly,
- wherein the second coupling element and the counterpart coupling element are releasably connected, preferably in a form-fitting manner, in an arresting position of the coupling device, and
- wherein the coupling device can be brought from a release position, in which a connection of the second coupling element (212, 222, 232, 242, 252, 262, 305) and the counterpart coupling element (124, 126) is released, into the arresting position by means of the third coupling movement of the third actuator (213, 310) and by means of the fourth coupling movement of the fourth actuator (216, 350), and
- wherein the third coupling movement has a third setting direction component and the fourth coupling movement has a fourth setting direction component, wherein the third setting direction component and the fourth setting direction component are directed in opposite directions,
- moving the first coupling element by means of the first actuator and by means of the second actuator and/or moving the second coupling element by means of the third actuator and by means of the fourth actuator from the release position into the arresting position, wherein the first coupling element and/or the second coupling element are or is releasably connected, preferably in a form-fitting manner, to the counterpart coupling element (124, 126) in the arresting position.

14. A method for moving a rotor (106) of a wind turbine (100) with a rotation assembly which is connected to a rotor in a rotationally rigid manner, in particular a wind turbine as claimed in at least one of the preceding claims 1-10, comprising
- arresting a rotor (106) as claimed in the preceding claim,
- moving the first coupling element (212, 222, 232, 242, 252, 262, 305) in a first tangential direction of the rotation assembly by means of the first actuator (213, 310) and/or by means of the second actuator (216, 350), wherein one of the actuators is preferably switched to a force-free state, and/or
- moving the second coupling element (212, 222, 232, 242, 252, 262, 305) in the first tangential direction of the rotation assembly by means of the third actuator and/or by means of the fourth actuator, wherein one of the actuators is preferably switched to a force-free state.

## Revendications

1. Éolienne (100) avec un rotor (106), un bloc rotatif relié au rotor de manière rigide en rotation et un bloc de support (200, 300) fixe par rapport au bloc rotatif, comprenant un dispositif d'arrêt de rotor (1, 1'), le dispositif d'arrêt de rotor (1, 1') comprenant
- au moins un dispositif de couplage (210, 220, 230, 240, 250, 260, 301), qui est disposé sur le bloc de support (200, 300) de l'éolienne (100) fixe par rapport au bloc rotatif, avec
o un premier actionneur (213, 310) pour un premier mouvement de couplage,
o un deuxième actionneur (216, 350) pour un deuxième mouvement de couplage, et
o un élément de couplage (212, 222, 232, 242, 252, 262, 305), lequel est relié au premier et au deuxième actionneur,
- un élément de couplage complémentaire (124, 126), qui est disposé sur le bloc rotatif,
- dans laquelle l'élément de couplage et l'élément de couplage complémentaire sont reliés dans une position d'arrêt du dispositif de couplage de manière libérable, de préférence par coopération de formes, et
- dans laquelle le dispositif de couplage peut être amené à partir d'une position de libération, dans laquelle une liaison de l'élément de couplage (212, 222, 232, 242, 252, 262, 305) et de l'élément de couplage complémentaire (124, 126) est libérée, dans la position d'arrêt au moyen du premier mouvement de couplage du premier actionneur (213, 310) et au moyen du deuxième mouvement de couplage du deuxième actionneur (216, 350), et
- dans laquelle le premier mouvement de couplage présente une première composante de direction de réglage et le deuxième mouvement de couplage présente une deuxième composante de direction de réglage, dans laquelle la première composante de direction de réglage et la deuxième composante de direction de réglage sont dirigées en sens opposés.

2. Éolienne (100) selon la revendication précédente, dans laquelle
le premier mouvement de couplage présente une première composante de direction de couplage et le deuxième mouvement de couplage présente une deuxième composante de direction de couplage, dans laquelle la première composante de direction de couplage et la deuxième composante de direction de couplage sont dirigées dans le même sens, dans laquelle la première composante de direction de couplage et la deuxième composante de direction de couplage sont dirigées de préférence à partir de l'élément de couplage (212, 222, 232, 242, 252, 262, 305) vers l'élément de couplage complémentaire (124, 126).

3. Éolienne (100) selon au moins l'une des revendications précédentes, dans laquelle le dispositif de couplage (210, 220, 230, 240, 250, 260, 301) peut être amené à partir de la position d'arrêt dans la position de libération au moyen d'un premier mouvement de découplage du premier actionneur et au moyen d'un deuxième mouvement de découplage du deuxième actionneur (216, 350),
et/ou
dans laquelle le premier mouvement de découplage présente une première composante de direction de position libre et le deuxième mouvement de découplage présente une deuxième composante de direction de position libre, dans laquelle la première composante de direction de position libre et la deuxième composante de direction de position libre sont dirigées en sens opposés, et/ou
dans laquelle le premier mouvement de découplage présente une première composante de direction de découplage et le deuxième mouvement de découplage présente une deuxième composante de direction de découplage, dans laquelle la première composante de direction de découplage et la deuxième composante de direction de découplage sont dirigées dans le même sens.

4. Éolienne (100) selon au moins l'une des revendications précédentes, dans laquelle le premier actionneur (213, 310) et le deuxième actionneur (216, 350) sont réalisés de manière à pouvoir être commandés respectivement indépendamment l'un de l'autre.

5. Éolienne (100) selon au moins l'une des revendications précédentes, dans laquelle le premier actionneur (213, 310) et/ou le deuxième actionneur (216, 350) comprend ou comprennent un cylindre (215, 218, 315, 355) déployable, et/ou
le premier actionneur (213, 310) et/ou le deuxième actionneur (216, 350) comprend ou comprennent un cylindre hydraulique (312, 352, 214, 217) ou est ou sont réalisé(s) en tant que cylindre hydraulique, dans laquelle le liquide hydraulique est de préférence de l'eau.

6. Éolienne (100) selon au moins l'une des revendications précédentes, dans laquelle le premier actionneur (213, 310) et/ou le deuxième actionneur (216, 350) peut ou peuvent être disposé(s) de manière rotative sur le bloc de support (200, 300), et/ou
dans laquelle le premier actionneur et/ou le deuxième actionneur est ou sont relié(s) de manière rotative à l'élément de couplage (212, 222, 232, 242, 252, 262, 305).

7. Éolienne (100) selon au moins l'une des revendications précédentes, dans laquelle l'élément de couplage complémentaire (124, 126) est disposé sur un dispositif de couplage complémentaire (120, 120'), qui est réalisé de préférence de manière annulaire, et dans laquelle le dispositif de couplage complémentaire peut être disposé sur le bloc rotatif, et/ou dans laquelle l'élément de couplage complémentaire est réalisé en tant qu'évidement à denture, et/ou dans laquelle l'élément de couplage complémentaire (124, 126) réalisé en tant qu'évidement à denture présente sensiblement une géométrie semi-circulaire, et/ou l'élément de couplage (212, 222, 232, 242, 252, 262, 305) présente une géométrie cylindrique.

8. Éolienne (100) selon au moins l'une des revendications précédentes, comprenant une pluralité d'éléments de couplage complémentaires (124, 126), qui sont réalisés de préférence en tant qu'évidements à denture semi-circulaires et sont espacés les uns des autres de préférence de moins de 45 degrés d'arc, et/ou de moins de 30 degrés d'arc, et/ou de moins de 25 degrés d'arc, et/ou de moins de 20 degrés d'arc, et/ou de moins de 15 degrés d'arc, et/ou de moins de 10 degrés d'arc, et/ou de moins de 7,5 degrés d'arc, et/ou de moins de 5 degrés d'arc, et/ou de moins de 2 degrés d'arc, et/ou de moins de 1 degré d'arc.

9. Éolienne (100) selon au moins l'une des revendications précédentes,
- comprenant un dispositif de commande, qui est disposé et réalisé pour déplacer l'élément de couplage (212, 222, 232, 242, 252, 262, 305) au moyen du premier actionneur (213, 310) et au moyen du deuxième actionneur (216, 350) à partir d'une position de libération dans une position d'arrêt, dans laquelle l'élément de couplage est relié à l'élément de couplage complémentaire (124, 126) dans la position d'arrêt de manière libérable, de préférence par coopération de formes,
et/ou
- comprenant un dispositif de commande, qui est disposé et réalisé pour déplacer l'élément de couplage (212, 222, 232, 242, 252, 262, 305) dans une première direction tangentielle du bloc rotatif au moyen du premier actionneur (213, 310) et/ou au moyen du deuxième actionneur (216, 350), dans laquelle un des actionneurs est de préférence monté sans force.

10. Éolienne (100) selon au moins l'une des revendications précédentes,
- comprenant un dispositif de commande, qui est disposé et réalisé pour déplacer le premier élément de couplage (212, 222, 232, 242, 252, 262, 305) au moyen du premier actionneur (213, 310) et au moyen du deuxième actionneur (216, 350) d'un premier dispositif de couplage (210, 220, 230, 240, 250, 260, 301) et/ou le deuxième élément de couplage (212, 222, 232, 242, 252, 262, 305) au moyen du premier actionneur et au moyen du deuxième actionneur d'un deuxième dispositif de couplage (210, 220, 230, 240, 250, 260, 301) à partir d'une position de libération dans une position d'arrêt, dans laquelle le premier élément de couplage et/ou le deuxième élément de couplage est ou sont reliés à un, deux éléments de couplage complémentaires (124, 126) ou plus dans la position d'arrêt de manière libérable, de préférence par coopération de formes,
et/ou
- comprenant un dispositif de commande, qui est disposé et réalisé pour déplacer le premier élément de couplage (212, 222, 232, 242, 252, 262, 305) dans une première direction tangentielle du bloc rotatif au moyen du premier actionneur (213, 310) et/ou au moyen du deuxième actionneur (216, 350) du premier dispositif de couplage (210, 220, 230, 240, 250, 260, 301), dans laquelle un des actionneurs est de préférence monté sans force et/ou pour déplacer le deuxième élément de couplage (212, 222, 232, 242, 252, 262, 305) dans la première direction tangentielle du bloc rotatif au moyen du premier actionneur (213, 310) et/ou au moyen du deuxième actionneur (216, 350) du deuxième dispositif de couplage (210, 220, 230, 240, 250, 260, 301), dans laquelle un des actionneurs est de préférence monté sans force,
et/ou
- comprenant un dispositif de commande, qui est disposé et réalisé pour déplacer le premier élément de couplage (212, 222, 232, 242, 252, 262, 305) dans une position d'arrêt, ensuite pour déplacer le deuxième élément de couplage (212, 222, 232, 242, 252, 262, 305) dans une position de libération et dans une deuxième direction tangentielle, et ensuite pour déplacer le premier élément de couplage dans la première direction tangentielle, pour déplacer le deuxième élément de couplage dans une position d'arrêt, ensuite pour déplacer le premier élément de couplage dans une position de libération et dans une deuxième direction tangentielle, et ensuite pour déplacer le deuxième élément de couplage dans la première direction tangentielle.

11. Procédé pour l'arrêt d'un rotor (106) d'une éolienne (100) avec un bloc rotatif relié au rotor de manière rigide en rotation, en particulier d'une éolienne selon au moins l'une des revendications précédentes, comprenant
- la fourniture d'un dispositif d'arrêt de rotor (1, 1') comprenant
o au moins un dispositif de couplage (210, 220, 230, 240, 250, 260, 301), qui est disposé sur un bloc de support (200, 300) de l'éolienne (100) fixe par rapport au bloc rotatif, avec
• un premier actionneur (213, 310) pour un premier mouvement de couplage,
• un deuxième actionneur (216, 350) pour un deuxième mouvement de couplage, et
• un élément de couplage (212, 222, 232, 242, 252, 262, 305), lequel est relié au premier et au deuxième actionneur,
o un élément de couplage complémentaire (124, 126), qui est disposé sur le bloc rotatif,
o dans lequel l'élément de couplage et l'élément de couplage complémentaire sont reliés dans une position d'arrêt du dispositif de couplage de manière libérable, de préférence par coopération de formes, et
o dans lequel le dispositif de couplage peut être amené à partir d'une position de libération, dans laquelle une liaison de l'élément de couplage (212, 222, 232, 242, 252, 262, 305) et de l'élément de couplage complémentaire (124, 126) est libérée, dans la position d'arrêt au moyen du premier mouvement de couplage du premier actionneur (213, 310) et au moyen du deuxième mouvement de couplage du deuxième actionneur (216, 350), et
o dans lequel le premier mouvement de couplage présente une première composante de direction de réglage et le deuxième mouvement de couplage présente une deuxième composante de direction de réglage, dans lequel la première composante de direction de réglage et la deuxième composante de direction de réglage sont dirigées en sens opposés,
- le déplacement de l'élément de couplage (212, 222, 232, 242, 252, 262, 305) au moyen du premier actionneur (213, 310) et au moyen du deuxième actionneur (216, 350) à partir de la position de libération dans la position d'arrêt, dans lequel le premier élément de couplage est relié à l'élément de couplage complémentaire (124, 126) dans la position d'arrêt de manière libérable, de préférence par coopération de formes.

12. Procédé pour déplacer un rotor (106) d'une éolienne (100) avec un bloc rotatif relié au rotor de manière rigide en rotation, en particulier d'une éolienne selon au moins l'une des revendications précédentes 1-10, comprenant
- l'arrêt d'un rotor selon la revendication précédente,
- le déplacement de l'élément de couplage dans une première direction tangentielle du bloc rotatif au moyen du premier actionneur (213, 310) et/ou au moyen du deuxième actionneur (216, 350), dans lequel un des actionneurs est de préférence monté sans force.

13. Procédé pour arrêter un rotor (106) d'une éolienne (100) avec un bloc rotatif relié au rotor de manière rigide en rotation, en particulier d'une éolienne selon au moins l'une des revendications précédentes 1-10, comprenant
- la fourniture d'un premier dispositif d'arrêt de rotor (1, 1') comprenant
-- au moins un dispositif de couplage (210, 220, 230, 240, 250, 260, 301), qui est disposé sur un bloc de support (200, 300) de l'éolienne (100) fixe par rapport au bloc rotatif, avec
--- un premier actionneur (213, 310) pour un premier mouvement de couplage,
--- un deuxième actionneur (216, 350) pour un deuxième mouvement de couplage, et
--- un premier élément de couplage (212, 222, 232, 242, 252, 262, 305), lequel est relié au premier et au deuxième actionneur,
-- un élément de couplage complémentaire (124, 126), qui est disposé sur le bloc rotatif,
-- dans lequel le premier élément de couplage et l'élément de couplage complémentaire sont reliés dans une position d'arrêt du dispositif de couplage de manière libérable, de préférence par coopération de formes, et
-- dans lequel le dispositif de couplage peut être amené à partir d'une position de libération, dans laquelle une liaison du premier élément de couplage (212, 222, 232, 242, 252, 262, 305) et de l'élément de couplage complémentaire (124, 126) est libérée, dans la position d'arrêt au moyen du premier mouvement de couplage du premier actionneur (213, 310) et au moyen du deuxième mouvement de couplage du deuxième actionneur (216, 350), et
-- dans lequel le premier mouvement de couplage présente une première composante de direction de réglage et le deuxième mouvement de couplage présente une deuxième composante de direction de réglage, dans lequel la première composante de direction de réglage et la deuxième composante de direction de réglage sont dirigées en sens opposés,
- la fourniture d'un deuxième dispositif d'arrêt de rotor (1, 1') comprenant
-- au moins un dispositif de couplage (210, 220, 230, 240, 250, 260, 301), qui est disposé sur un bloc de support (200, 300) de l'éolienne (100) fixe par rapport au bloc rotatif, avec
--- un troisième actionneur (213, 310) pour un troisième mouvement de couplage,
--- un quatrième actionneur (216, 350) pour un quatrième mouvement de couplage, et
--- un deuxième élément de couplage (212, 222, 232, 242, 252, 262, 305), lequel est relié au troisième et au quatrième actionneur,
-- un élément de couplage complémentaire (124, 126), qui est disposé sur le bloc rotatif,
-- dans lequel le deuxième élément de couplage et l'élément de couplage complémentaire sont reliés dans une position d'arrêt du dispositif de couplage de manière libérable, de préférence par coopération de formes, et
-- dans lequel le dispositif de couplage peut être amené à partir d'une position de libération, dans laquelle une liaison du deuxième élément de couplage (212, 222, 232, 242, 252, 262, 305) et de l'élément de couplage complémentaire (124, 126) est libérée, dans la position d'arrêt au moyen du troisième mouvement de couplage du troisième actionneur (213, 310) et au moyen du quatrième mouvement de couplage du quatrième actionneur (216, 350), et
-- dans lequel le troisième mouvement de couplage présente une troisième composante de direction de réglage et le quatrième mouvement de couplage présente une quatrième composante de direction de réglage, dans lequel la troisième composante de direction de réglage et la quatrième composante de direction de réglage sont dirigées en sens opposés,
- le déplacement du premier élément de couplage au moyen du premier actionneur et au moyen du deuxième actionneur et/ou le déplacement du deuxième élément de couplage au moyen du troisième actionneur et au moyen du quatrième actionneur à partir de la position de libération dans la position d'arrêt, dans lequel le premier élément de couplage et/ou le deuxième élément de couplage est ou sont reliés à l'élément de couplage complémentaire (124, 126) dans la position d'arrêt de manière libérable, de préférence par coopération de formes.

14. Procédé pour déplacer un rotor (106) d'une éolienne (100) avec un bloc rotatif relié au rotor de manière rigide en rotation, en particulier d'une éolienne selon au moins l'une des revendications précédentes 1-10, comprenant
- l'arrêt d'un rotor (106) selon la revendication précédente,
- le déplacement du premier élément de couplage (212, 222, 232, 242, 252, 262, 305) dans une première direction tangentielle du bloc rotatif au moyen du premier actionneur (213, 310) et/ou au moyen du deuxième actionneur (216, 350), dans lequel un des actionneurs est monté de préférence sans force, et/ou
- le déplacement du deuxième élément de couplage (212, 222, 232, 242, 252, 262, 305) dans la première direction tangentielle du bloc rotatif au moyen du troisième actionneur et/ou au moyen du quatrième actionneur, dans lequel un des actionneurs est monté de préférence sans force.
